(19) Europäisches Patentamt
European Patent Office
Office européen des brevets

(11) EP 4 375 398 A1

(12) # EUROPEAN PATENT APPLICATION
published in accordance with Art. 153(4) EPC

(43) Date of publication:
**29.05.2024 Bulletin 2024/22**

(21) Application number: **22845962.4**

(22) Date of filing: **20.07.2022**

(51) International Patent Classification (IPC):
***C25B 3/26*** (2021.01) ***B01D 53/26*** (2006.01)
***B01D 53/32*** (2006.01) ***C07C 7/148*** (2006.01)
***C07C 9/04*** (2006.01) ***C07C 9/06*** (2006.01)
***C25B 1/02*** (2006.01) ***C25B 1/23*** (2021.01)
***C25B 15/023*** (2021.01) ***C25B 15/08*** (2006.01)

(52) Cooperative Patent Classification (CPC):
**B01D 53/26; B01D 53/32; C07C 7/148; C07C 9/04; C07C 9/06; C25B 1/02; C25B 1/23; C25B 3/26; C25B 15/023; C25B 15/08**

(86) International application number:
**PCT/JP2022/028267**

(87) International publication number:
**WO 2023/003029 (26.01.2023 Gazette 2023/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.07.2021 JP 2021120439**

(71) Applicants:
- **Chiyoda Corporation
Kanagawa 220-8765 (JP)**
- **OSAKA UNIVERSITY
Suita-shi
Osaka 565-0871 (JP)**

(72) Inventors:
- **MATSUMOTO, Jun
Yokohama-shi, Kanagawa 220-8765 (JP)**
- **TAKEDA, Dai
Yokohama-shi, Kanagawa 220-8765 (JP)**
- **HASHIMOTO, Shinya
Yokohama-shi, Kanagawa 220-8765 (JP)**
- **OBA, Ittetsu
Yokohama-shi, Kanagawa 220-8765 (JP)**
- **NAKANISHI, Shuji
Suita-shi, Osaka 565-0871 (JP)**
- **KAMIYA, Kazuhide
Suita-shi, Osaka 565-0871 (JP)**

(74) Representative: **Dehns
St. Bride's House
10 Salisbury Square
London EC4Y 8JD (GB)**

(54) **CARBON DIOXIDE RECOVERY SYSTEM**

(57) TASK
To improve energy efficiency in a carbon dioxide recovery system.
SOLUTION
The carbon dioxide recovery system (1) comprises an electrolytic reduction device (2) that generates a producer gas by reducing carbon dioxide, and a carbon dioxide separation device (3) that separates the carbon dioxide from the processed gas. The carbon dioxide separation device is provided with a first gas diffusion electrode (51), a second gas diffusion electrode (52), a liquid chamber (53) formed between the first gas diffusion electrode and the second gas diffusion electrode (52), and is configured to be supplied with an electrolytic liquid containing a compound that adsorbs and desorbs protons in an oxidation-reduction reaction, a first chamber (54) separated from the liquid chamber by the first gas diffusion electrode and configured to be supplied with the producer gas, and a second chamber (55) separated from the liquid chamber by the second gas diffusion electrode and through which the carbon dioxide separated from the producer gas flow. The electrolytic reduction device uses the carbon dioxide separated from the processed gas in the carbon dioxide separation device as a part of an input material thereof.

EP 4 375 398 A1

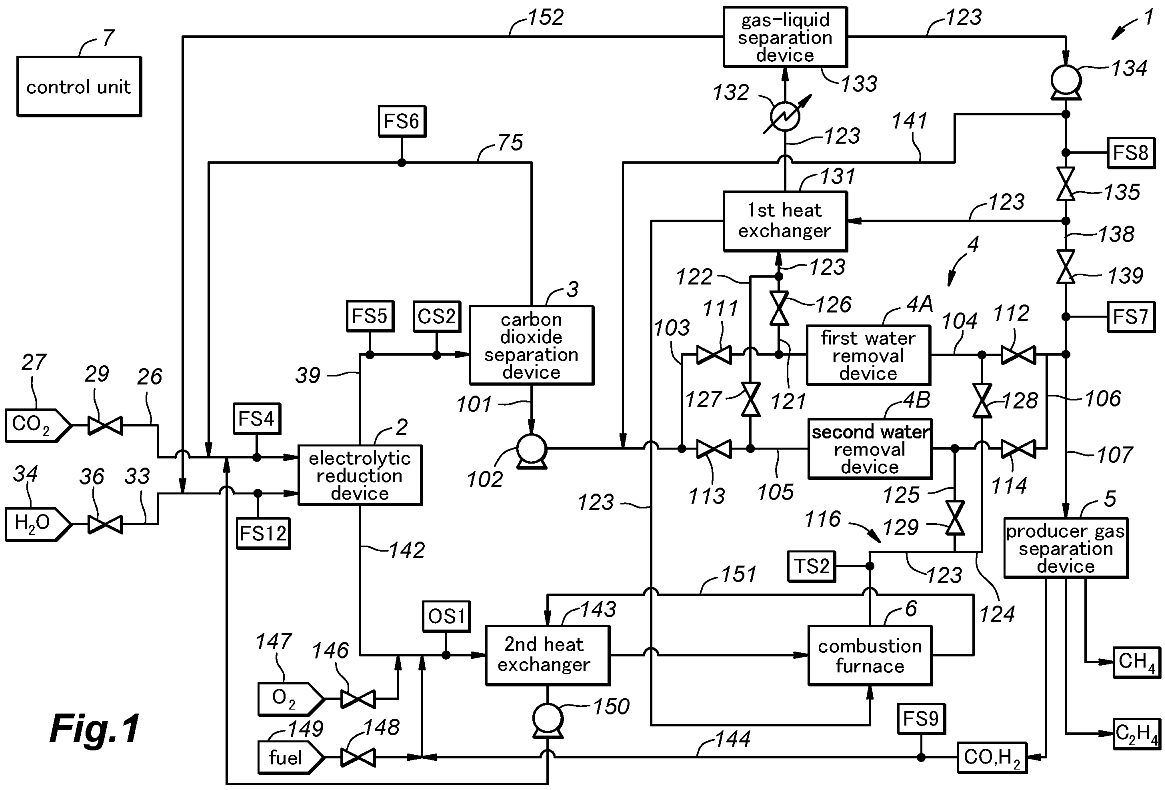
control unit
gas-liquid separation device
carbon dioxide separation device
electrolytic reduction device
1st heat exchanger
first water removal device
second water removal device
producer gas separation device
2nd heat exchanger
combustion furnace
FS4
FS5
FS6
FS7
FS8
FS9
FS12
CS2
OS1
TS2
$CO_2$
$H_2O$
$O_2$
fuel
$CH_4$
$C_2H_4$
CO,$H_2$
1
2
3
4
4A
4B
5
6
7
26
27
29
33
34
36
39
75
101
102
103
104
105
106
107
111
112
113
114
116
121
122
123
124
125
126
127
128
129
131
132
133
134
135
138
139
141
142
143
144
146
147
148
149
150
151
152

Fig.1

## Description

TECHNICAL FIELD

The present invention relates to a carbon dioxide recovery system.

BACKGROUND ART

Patent Document 1 discloses a carbon dioxide electrolytic device that produces hydrocarbons having one or more carbon atoms such as ethylene ($C_2H_4$), methane ($CH_4$), methanol ($CH_3OH$), and ethanol ($C_2H_5OH$) by an electrolytic reduction reaction of carbon dioxide ($CO_2$). A carbon dioxide electrolytic device can be applied to a carbon dioxide recovery system that separates and recovers carbon dioxide from gas.

PRIOR ART DOCUMENT(S)

PATENT DOCUMENT(S)

Patent Document 1: JP6622237B2

SUMMARY OF THE INVENTION

TASK TO BE ACCOMPLISHED BY THE INVENTION

In a carbon dioxide electrolytic device, carbon dioxide is reduced at the cathode to produce hydrocarbons such as ethylene. Since the hydrocarbons produced at the cathode are discharged from the carbon dioxide electrolytic device together with unreacted carbon dioxide, it is necessary to separate the carbon dioxide in a subsequent step. One of possible separation methods is a cryogenic separation method. However, when carbon dioxide is cooled at a pressure of several tens of times the atmospheric pressure, which is a typical pressure level in existing ethylene plants, the carbon dioxide changes from a gaseous state to a solid state which is known to be inconvenient for handling as compared to a liquid state so that the efficiency in the recovery and reuse of the carbon dioxide is impaired. Moreover, in order to collect carbon dioxide in a liquid state, the carbon dioxide is required to be placed under a high pressure, and this again poses a problem of poor energy efficiency. Another separation method is to use an amine compound to absorb carbon dioxide therein. However, in this method, the amine compound is required to be heated when recovering the carbon dioxide from the amine compound, and this again poses a problem of poor energy efficiency.

In view of such a problem of the prior art, a primary object of the present invention is to improve energy efficiency in a carbon dioxide recovery system.

MEANS TO ACCOMPLISH THE TASK

To achieve such an object, one aspect of the present invention provides a carbon dioxide recovery system (1), comprising, an electrolytic reduction device (2) configured to be supplied with a gas containing carbon dioxide and generate a mixed gas containing at least a producer gas containing at least one of a hydrocarbon, carbon monoxide and hydrogen, and unreacted carbon dioxide by an electrolytic reduction of the carbon dioxide; and a carbon dioxide separation device (3) that separates the carbon dioxide from the mixed gas, wherein the carbon dioxide separation device comprises a first gas diffusion electrode (51) serving as a cathode, a second gas diffusion electrode (52) serving as an anode, a liquid chamber (53) formed between the first gas diffusion electrode and the second gas diffusion electrode (52) and configured to be supplied with an electrolytic liquid containing a compound that adsorbs and desorbs protons in an oxidation-reduction reaction, a first chamber (54) separated from the liquid chamber by the first gas diffusion electrode and configured to be supplied with the mixed gas, and a second chamber (55) separated from the liquid chamber by the second gas diffusion electrode and through which the carbon dioxide separated from the mixed gas flow, the electrolytic reduction device being configured to use the carbon dioxide separated from the mixed gas in the carbon dioxide separation device as a part of an input material thereof.

According to this aspect, the carbon dioxide is separated from the mixed gas in a gaseous state, which is suitable for recovery and reuse of the carbon dioxide. In addition, the carbon dioxide separation device based on electrochemistry can separate carbon dioxide from the mixed gas with less energy than the separation method using an amine compound. Therefore, this carbon dioxide recovery system is improved in energy efficiency.

In this aspect of the present invention, preferably, the carbon dioxide recovery system further comprises at least one water removal device (4) for separating water from the producer gas from which carbon dioxide has been

separated in the carbon dioxide separation device, and a producer gas separation device (5) for separating a hydrocarbon from the producer gas by cooling the producer gas from which water has been separated in the water removal device.

According to this aspect, water and the hydrocarbon can be efficiently separated from the producer gas. Further, even if water is mixed in the producer gas in the electrolytic reduction device or the carbon dioxide separation device, the water is separated in the subsequent water removal device.

In this aspect of the present invention, preferably, the carbon dioxide recovery system further comprises a combustion furnace (6) for burning at least a part of an off-gas generated from the producer gas by removing a hydrocarbon therefrom in the producer gas separation device, the water removal device being configured to perform an adsorption step for releasing the producer gas after removing water therefrom by adsorption and a desorption step for releasing the water adsorbed in the adsorption step by using heat generated in the combustion furnace.

According to this aspect, the heat generated by the combustion of combustible gases such as hydrogen and carbon monoxide contained in the producer gas can be used for performing the desorption step of the water removal device so that energy efficiency can be improved.

In this aspect of the present invention, preferably, the carbon dioxide recovery system further comprises a first gas-liquid separation device (133) for separating liquefied water from the producer gas released in the desorption step and containing water, and a recirculation passage (116) for returning the producer gas from which the liquefied water has been removed in the first gas-liquid separation device to the water removal device, the recirculation passage being in a heat exchanging relationship with the combustion furnace.

According to this aspect, the heat generated in the combustion furnace can be used to perform the desorption process of the water removal device.

In this aspect of the present invention, preferably, a part of the producer gas from which water has been removed in the water removal device is supplied to the recirculation passage.

According to this aspect, a part of the producer gas can be used to supply the heat of the combustion furnace to the water removal device.

In this aspect of the present invention, preferably, the carbon dioxide recovery system further comprises an exhaust gas passage (151) for supplying exhaust gas generated in the combustion furnace and containing carbon dioxide and water to the electrolytic reduction device.

According to this aspect, the carbon dioxide and water generated in the combustion furnace can be used as part of the input material for producing a hydrocarbon, carbon monoxide, and the like.

In this aspect of the present invention, preferably, the water removal device is one of a pair of water removal devices (4A, 4B) that are provided in parallel to each other, and when one of the water removal devices is performing the adsorption step, the other water removal device performs the desorption steps.

According to this aspect, the electrolytic reduction can be operated in a continuous manner.

In this aspect of the present invention, preferably, the carbon dioxide recovery system further comprises a carbon dioxide recirculation passage (71) connected to an inlet and an outlet of the second chamber of the carbon dioxide separation device, a carbon dioxide return passage (75) connecting the carbon dioxide recirculation passage to an inlet of a cathode chamber of the electrolytic reduction device, a mixed gas inlet passage (62) connecting an inlet of the first chamber of the carbon dioxide separation device to an outlet of the cathode chamber of the electrolytic reduction device, a producer gas outlet passage (64, 66) connected to an outlet of the first chamber of the carbon dioxide separation device, and an electrolytic liquid tank (82) connected to an inlet of the liquid chamber via an electrolytic liquid supply passage (81) and to an outlet of the liquid chamber via a first electrolytic liquid return passage (87).

According to this aspect, the carbon dioxide can be supplied to the electrolytic reduction device via the carbon dioxide return passage after being increased in pressure in the carbon dioxide recirculation passage.

In this aspect of the present invention, preferably, the carbon dioxide recovery system further comprises a second gas-liquid separation device (72) provided in the carbon dioxide recirculation passage, a second electrolytic liquid return passage (95) for transferring liquid separated in the second gas-liquid separation device to the electrolytic liquid tank, a first pressure control valve (76) provided in the carbon dioxide return passage, a second pressure control valve (68) provided in the mixed gas inlet passage or the producer gas outlet passage, a third pressure control valve (flow rate control valve) (84) provided in the electrolytic liquid supply passage or the first electrolytic liquid return passage, a first pressure sensor (PS1) for detecting a pressure in the first chamber as a first pressure, a second pressure sensor (PS2) for detecting a pressure in the second chamber as a second pressure, a third pressure sensor (PS3) for detecting a pressure in the liquid chamber as a third pressure, and a control unit (7) for controlling the first pressure control valve, the second pressure control valve, and the third pressure control valve so that the first pressure is equal to or higher than the third pressure, and the third pressure is equal to or higher than the second pressure.

According to this aspect, the electrolytic liquid is prevented from being mixed with the producer gas. In addition, the electrolytic liquid that has leaked into the carbon dioxide recirculation passage can be returned to the electrolytic liquid tank.

In this aspect of the present invention, preferably, the carbon dioxide recovery system further comprises a

fourth pressure control valve (69) provided in a part of the producer gas outlet passage downstream of the first pressure control valve, a gas return passage (97) connected between a top part of the electrolytic liquid tank and a part of the producer gas outlet passage upstream of the fourth pressure control valve, and a fourth pressure sensor (PS4) for detecting a pressure of the electrolytic liquid tank as a fourth pressure, wherein the control unit is configured to control the first pressure control valve, the second pressure control valve, the third pressure control valve and the fourth pressure control valve so that the first pressure is equal to or higher than the third pressure, the third pressure is equal to or higher than the fourth pressure, and the fourth pressure is equal to or higher than the second pressure.

According to this aspect, the gas remaining at the top of the electrolytic liquid tank can be returned to the producer gas outlet passage via the gas return passage.

In this aspect of the present invention, preferably, the hydrocarbon includes at least one of methane and ethylene.

According to this aspect, at least one of methane, ethylene, and carbon monoxide can be produced from the carbon dioxide.

In this aspect of the present invention, preferably, the compound that adsorbs and desorbs protons by oxidation-reduction is an organic compound having an oxidation-reduction potential of -1.0 V to 1.0 V based on a standard hydrogen electrode potential at pH 7. The compound that adsorbs and desorbs protons by oxidation-reduction may be a quinone-based compound.

According to these aspects, carbon dioxide can be efficiently separated.

To achieve such an object, another aspect of the present invention provides a carbon dioxide recovery system (1), comprising, an electrolytic reduction device (2) configured to be supplied with a gas containing carbon dioxide and generate a mixed gas containing at least a producer gas containing at least one of a hydrocarbon, carbon monoxide and hydrogen, and unreacted carbon dioxide by an electrolytic reduction of the carbon dioxide; and a carbon dioxide separation device (400) configured to separate carbon dioxide gas from the mixed gas, wherein the carbon dioxide separation device includes a carbon dioxide absorption unit (401) configured to contact the mixed gas with an electrolytic liquid containing a compound that adsorbs and desorbs protons in an oxidation-reduction reaction to cause the carbon dioxide in the mixed gas to be adsorbed in the electrolytic liquid, an electrochemical cell (402) which is partitioned into a cathode chamber (417) and an anode chamber (418) by a membrane electrode assembly (416) including an electrolytic membrane (416A) and a cathode (416B) and an anode (416C) formed on either side of the electrolytic membrane and connected to a power supply (419), a first passage (403) for flowing the electrolytic liquid from the carbon dioxide gas absorption unit to the anode chamber, a second passage (404) for flowing the electrolytic liquid from the anode chamber to the cathode chamber, a third passage (405) for flowing the electrolytic liquid from the cathode chamber to the carbon dioxide gas absorption unit, and a gas-liquid separation device (406) provided in the second passage for separating carbon dioxide gas from the electrolytic liquid, the electrolytic reduction device being configured to use the carbon dioxide separated from the mixed gas in the carbon dioxide separation device as part of input material thereof.

According to this aspect, carbon dioxide is separated from the mixed gas in a gaseous state, which is suitable for recovery and reuse thereof. In addition, the carbon dioxide separation device based on electrochemistry can separate carbon dioxide from the mixed gas with less energy than a separation method using an amine compound. Thereby, energy efficiency can be improved in the carbon dioxide recovery system.

In this aspect of the present invention, preferably, the carbon dioxide absorption unit includes a housing (431) extending vertically and configured to store the electrolytic liquid in a bottom part thereof, a gas inlet (411) provided in a lower part of the housing for feeding the mixed gas into the housing, a gas outlet (412) provided in an upper part of the housing for discharging the mixed gas from the housing, a nozzle (432) provided in an upper part of the housing for injecting the electrolytic liquid into the housing, a fourth passage (433) for supplying the electrolytic liquid stored in the bottom part of the housing to the nozzle, a tray (434) provided in a part of the housing located between the gas inlet and the nozzle for temporarily storing the electrolytic liquid supplied from the nozzle, and an electrolytic liquid outlet (414) provided in the tray, wherein the electrolytic liquid outlet is connected to the first passage, the third passage is connected to the fourth passage, the third passage is provided with a first flow rate control valve (436A), and a second flow rate control valve (436B) provided in a part of the fourth passage closer to the bottom part of the housing than the third passage, the power supply, the first flow rate control valve and the second flow rate control valve being controlled by a control unit (7) in such a manner that

$$pH3 \geqq pH2 \geqq pH1 \geqq pH4 \geqq 5.5$$

where pH1 is a pH value of the electrolytic liquid stored in the bottom part of the housing, pH2 is a pH value of the electrolytic liquid in a part of the fourth passage closer to the nozzle than the third passage, pH3 is a pH value of the electrolytic liquid flowing through the third passage, and pH4 is a pH value of the electrolytic liquid flowing through the first passage.

According to this aspect, carbon dioxide gas can be adsorbed into the electrolytic liquid and release the carbon

dioxide gas from the electrolytic liquid in an efficient manner.

EFFECT OF THE INVENTION

These aspects of the present invention allow energy efficiency to be improved in a carbon dioxide recovery system.

BRIEF DESCRIPTION OF THE DRAWINGS

Figure 1 is an explanatory diagram showing a carbon dioxide recovery system according to a first embodiment of the present invention;
Figure 2 is an explanatory diagram showing an electrolytic reduction device in the first embodiment;
Figure 3 is an explanatory diagram showing a carbon dioxide separation device in the first embodiment;
Figure 4 is an explanatory diagram showing a mechanism of carbon dioxide separation in the carbon dioxide separation device;
Figure 5 is an explanatory diagram showing a carbon dioxide separation device according to a second embodiment of the present invention;
Figure 6 is an explanatory diagram showing a carbon dioxide separation device according to a third embodiment of the present invention;
Figure 7 is a simplified explanatory diagram showing a carbon dioxide separation device according to a fourth embodiment of the present invention;
Figure 8 is a detailed explanatory diagram showing the carbon dioxide separation device of the fourth embodiment;
Figure 9 is a graph showing the recovery rates of various components in the first embodiment; and
Figure 10 is a graph showing the recovery rates of various components in the second embodiment.

DETAILED DESCRIPTION OF THE PREFERRED EMBODIMENT(S)

A carbon dioxide recovery system according to an embodiment of the present invention will be described in the following. As shown in FIG. 1, the carbon dioxide recovery system 1 of this embodiment includes an electrolytic reduction device 2 and a carbon dioxide separation device 3 as main components thereof. The carbon dioxide recovery system 1 further includes a water removal device 4, a producer gas separation device 5 and a combustion furnace 6. The carbon dioxide recovery system 1 further includes a control unit 7 that controls various devices thereof, flow rate control valves, etc. which will be described later. The control unit 7 has a processor, memory, and a storage device that stores programs, and is configured to control the various devices by executing the programs.

The electrolytic reduction device 2 is supplied with a gas containing carbon dioxide and generates a mixed gas containing at least a producer gas containing at least one of a hydrocarbon, carbon monoxide and hydrogen, and unreacted carbon dioxide by an electrolytic reduction of the carbon dioxide. The mixed gas is discharged from a side of a cathode 16 of the electrolytic reduction device 2. At the cathode of the electrolytic reduction device 2, as represented by the following chemical formulas (1) to (4), by using a suitable catalyst added to the electrodes thereof and setting a suitable operating condition, a product containing ethylene as a main product and carbon monoxide, methane, hydrogen, etc. as by-products by reduction of the carbon dioxide.

$$2CO_2 + 12H^+ + 12e^- \rightarrow C_2H_4 + 4H_2O \ldots \quad (1)$$

$$CO_2 + 8H^+ + 8e^- \rightarrow CH_4 + 2H_2O \ldots \quad (2)$$

$$CO_2 + 2H^+ + 2e^- \rightarrow CO + H_2O \ldots \quad (3)$$

$$2H^+ + 2e^- \rightarrow H_2 \ldots \quad (4)$$

At the anode of the electrolytic reduction device 2, water is oxidized to produce oxygen according to the chemical formula (5) given below;

$$2H_2O \rightarrow O_2 + 4H^+ + 4e^- \ldots \quad (5)$$

The electrolytic reduction device 2 may consist of a three-chamber type electrolytic reduction device having a

cathode gas chamber and a cathode liquid chamber, which are separated from each other by a cathode consisting of a gas diffusion electrode, and an anode chamber partitioned from the cathode liquid chamber by a separator and provided with an anode, an electrolytic reduction device using a membrane electrode assembly (MEA) in which an electrolytic membrane is sandwiched between a cathode and an anode, or the like.

Figure 2 shows an example of the electrolytic reduction device 2. The electrolytic reduction device 2 is provided with an electrolytic cell 14 having a cathode chamber 11 and an anode chamber 12 which are separated from each other by a membrane electrode assembly 10. The membrane electrode assembly 10 has an electrolytic liquid membrane 15, a cathode 16 formed on one side of the electrolytic liquid membrane 15, and an anode 17 formed on the other side of the electrolytic liquid membrane 15. Gaseous carbon dioxide is supplied to the cathode chamber 11. Anode liquid is supplied to the anode chamber 12. The cathode 16 and anode 17 are connected to a DC power supply 19.

An anode liquid is an aqueous solution in which an electrolyte is dissolved. The electrolyte includes at least one of potassium, sodium, lithium, and compounds thereof. The electrolyte may include, for example, at least one selected from the group consisting of LiOH, NaOH, KOH, $Li_2CO_3$, $Na_2CO_3$, $K_2CO_3$, $LiHCO_3$, $NaHCO_3$, and $KHCO_3$.

The electrolytic liquid membrane 15 is made of a proton conductor that is permeable to protons. The electrolytic liquid membrane 15 is, for example, a solid polymer electrolytic liquid membrane, such as a cation exchange resin membrane based on fluororesin having sulfonic acid groups.

The cathode 16 is a gas diffusion electrode. The cathode 16 is permeable to gases including carbon dioxide. The cathode 16 may be formed by applying a water-repellent film such as polytetrafluoroethylene on the surface of a porous conductive substrate such as carbon paper, carbon felt, or carbon cloth. The conductive substrate is connected to the negative terminal of the DC power supply 19 and is supplied with electrons. A catalyst is supported on the cathode 16. The catalyst may be a known carbon dioxide reduction catalyst, such as a group XI element such as copper, a group XII element such as zinc, a group XIII element such as gallium, a group XIV element such as germanium, or a metal compound of at least one of these. The metal compound may include at least one of an oxide, sulfide, and phosphide. The catalyst is preferably one suitable for reducing carbon dioxide to produce ethylene, and may be a material combining a metal of group XI, group XII, group XIII, or group XIV or a metal compound of any such metal with copper or a copper compound.

The anode 17 is made of, for example, a metal material such as titanium, nickel, molybdenum, platinum, gold, silver, copper, iron, lead or an alloy thereof, a carbon-based material such as carbon, or a conductive ceramic. The anode 17 may be in the form of a plate with multiple perforations, a mesh, or a porous member. The anode 17 carries an oxygen generating catalyst such as platinum or iridium.

The DC power supply 19 converts electric power obtained by thermal power generation, nuclear power generation, solar power generation, wind power generation, hydroelectric power generation, etc. into DC power as required, and supplies the DC power to the cathode 16 and the anode 17. From the viewpoint of reducing carbon dioxide emissions, it is preferable to use power obtained from solar power generation, wind power generation, hydraulic power generation, or the like using natural energy (renewable energy) for the DC power supply 19. The DC power supply 19 applies a voltage to the anode 17 so that the cathode 16 has a negative potential. The DC power supply 19 preferably acquires the potential of the cathode 16 by using a reference electrode and controls the applied voltage so that the potential of the cathode 16 is kept within a predetermined range.

The cathode chamber 11 is provided with an inlet 24 and an outlet 25. As shown in FIGS. 1 and 2, the inlet 24 of the cathode chamber 11 is connected to a carbon dioxide supply 27 via a first supply passage 26. The carbon dioxide supply 27 is not particularly limited to any configuration as long as it can supply carbon dioxide gas and is preferably a storage tank or the like. The outlet 25 of the cathode chamber 11 is connected via a gas recirculation passage 28 to the first supply passage 26. A flow rate control valve 29 is provided between the carbon dioxide supply 27 and the first supply passage 26. The flow rate control valve 29 controls the flow rate of the carbon dioxide gas supplied from the carbon dioxide supply 27 to the first supply passage 26.

The anode chamber 12 is provided with an inlet 31 and an outlet 32. The inlet 31 of the anode chamber 12 is connected to a water supply 34 via a second supply passage 33. The water supply 34 supplies liquid water to the second supply passage 33. The outlet 32 of the anode chamber 12 is connected to the second supply passage 33 via an anode liquid recirculation passage 35. A flow rate control valve 36 is provided between the water supply 34 and the second supply passage 33. The flow rate control valve 36 controls the flow rate of the liquid water supplied from the water supply 34 to the second supply passage 33. The second supply passage 33 is provided with a flow rate sensor FS12 for measuring the flow rate of the water flowing therein.

The gas recirculation passage 28 is provided with a gas circulation flow control unit 38 for discharging a part of the gas circulating therein. The gas circulation flow control unit 38 has an outlet which is connected to the cathode outlet passage 39. The gas circulation flow control unit 38 regulates the flow rate and pressure of the gas circulating through the gas recirculation passage 28 and the cathode chamber 11 by discharging a part of the gas to the cathode outlet passage 39.

The anode liquid recirculation passage 35 is provided with a gas-liquid separation device 41 which separates

the gas from the anode liquid and delivers the gas to the anode outlet passage 42. Further, the anode liquid recirculation passage 35 may be provided with an electrolytic liquid concentration control unit 43 for adjusting the electrolytic liquid concentration of the anode fluid within a predetermined range. The electrolytic liquid concentration control unit 43 may include a sensor for detecting the electrolytic liquid concentration of the anode liquid, an electrolytic liquid supply device for supplying fresh anode liquid having a predetermined concentration, and a drain device for discharging a part of the circulating anode liquid.

The carbon dioxide in the cathode chamber 11 diffuses into the cathode 16 and is reduced (see chemical formula (1)). This yields a producer gas containing ethylene as the main product and methane, hydrogen, carbon monoxide, formic acid, etc. as by-products. The producer gas is mixed with the unreacted carbon dioxide in the cathode chamber 11 to form a mixed gas. The mixed gas may contain water and hydrocarbons such as propane and butane. The main components of the mixed gas are ethylene and carbon dioxide.

The producer gas containing the product of the reduction reaction of the carbon dioxide and the unreacted carbon dioxide circulates through the gas recirculation passage 28 and is delivered from the gas circulation flow control unit 38 to the cathode outlet passage 39.

At the anode 17, water and hydroxide ions in the anode liquid are oxidized to generate gaseous oxygen (see chemical formula (5)). The gaseous oxygen is separated from the anode liquid by the gas-liquid separation device 41 in the anode liquid recirculation passage 35 and delivered to the anode outlet passage 42.

In the electrolytic reduction device 2, the potential of the catalyst supported on the cathode 16 and the cathode 16 is preferably set so that the Faraday efficiency for ethylene production at the cathode 16 is 30% or greater, preferably 50% or greater. Here, the Faraday efficiency is defined as the ratio of the current that contributed to the production of each product to the total current that is conducted through the electrolytic cell 14. In the electrolytic reduction device 2, the catalyst supported on the cathode 16 is preferably selected so that the selectivity for ethylene production at the cathode 16 is 30% or greater.

The gas flowing through the anode outlet passage 42 is primarily oxygen. In some cases, the gas flowing through the anode outlet passage 42 is mixed with carbon dioxide.

The mixed gas discharged from the cathode outlet passage 39 of the electrolytic reduction device 2 is supplied to the carbon dioxide separation device 3. The carbon dioxide separation device 3 separates carbon dioxide from the mixed gas. As shown in FIG. 3, the carbon dioxide separation device 3 includes a first gas diffusion electrode 51 as a cathode, a second gas diffusion electrode 52 as an anode, a liquid chamber 53 formed between the first gas diffusion electrode 51 and the second gas diffusion electrode 52 and supplied with an electrolytic liquid containing a compound that adsorbs and desorbs protons by oxidation and reduction, a first chamber 54 separated from the liquid chamber 53 by the first gas diffusion electrode 51 and supplied with the producer gas, and a second chamber 55 separated from the liquid chamber 53 by the second gas diffusion electrode 52 and through which the carbon dioxide separated from the producer gas flows. In this embodiment, the carbon dioxide separation device 3 includes a stack 59 having first units and second units stacked upon one another in an alternating manner in a mutually spaced apart relationship, each first unit including the second gas diffusion electrode 52, the liquid chamber 53 and the first gas diffusion electrode 51 that are arranged in this order, each second unit including the first gas diffusion electrode 51, the liquid chamber 53 and the second gas diffusion electrodes 52 that are arranged in this order. A first chamber 54 is formed between each adjacent pair of the first gas diffusion electrodes 51, and a second chamber 55 is formed between each adjacent pair of the second gas diffusion electrodes 52.

The first gas diffusion electrodes 51 and the second gas diffusion electrodes 52 are each provided with a porous conductor. The porous conductor preferably has a large specific surface area in order to increase the reaction area. Preferably, the specific surface area of the porous conductor is 1 $m^2/g$ or more, more preferably 100 $m^2/g$ or more, still more preferably 500 $m^2/g$ or more, in the BET adsorption measurement. The surface resistance of the porous conductor is preferably as low as possible, and may be 1 kΩ /□ or less, more preferably 200 Ω /□ or less. The porous conductor may be, for example, a carbon sheet, carbon cloth, or carbon paper.

In order to minimize the voltage drop (IR drop) due to solution resistance, the first gas diffusion electrodes 51 and the second gas diffusion electrodes 52 are preferably placed as close to one another as possible without touching. A separator may be inserted between each first gas diffusion electrode 51 and the adjoining second gas diffusion electrode 52. The separator has insulating properties and is permeable to the electrolytic liquid. The separator may be selected from, for example, porous membranes made of polyolefin such as polyethylene and polypropylene membranes, porous membranes made of polyester, aliphatic polyamide, or aromatic polyamide, or non-woven fabric.

The first gas diffusion electrodes 51 are connected to the negative terminal of a DC power supply 61, and the second gas diffusion electrodes 52 are connected to the positive terminal of the DC power supply 61.

The cathode outlet passage 39 of the electrolytic reduction device 2 is connected to the inlets of the first chambers 54 via a mixed gas inlet passage 62. A downstream part of the mixed gas inlet passage 62 branches out to the different first chambers 54. A blower 63 is provided in the upstream part of the mixed gas inlet passage 62 to forward the producer gas to the first chambers 54.

The outlets of the first chambers 54 are connected to a first vessel 65 via corresponding first producer gas outlet passages 64. The first vessel 65 is connected to a second producer gas outlet passage 66. The producer gas discharged from the first chambers 54 passes through the first producer gas outlet passages 64, the first vessel 65, and the second producer gas outlet passage 66, and exits the carbon dioxide separation device 3. The second producer gas outlet passage 66 is provided with a pressure control valve 68 and a pressure control valve 69 in that order from the side of the first vessel 65. The outlets of first chambers 54 may be positioned above the inlets thereof.

The inlet and outlet of each second chamber 55 are connected to each other by a carbon dioxide recirculation passage 71. The outlets of the second chambers 55 are preferably positioned below the inlets of the second chambers 55. A second vessel 72, a blower 73, and a third vessel 74 are provided in the carbon dioxide recirculation passage 71 in this order from the outlets to the inlets of the second chambers 55. Primarily, dioxide gas flows through the second chambers 55 and the carbon dioxide recirculation passage 71.

The second vessel 72 functions as a gas-liquid separation device. The bottom of the second vessel 72 is positioned below the outlets of the second chambers 55, and the carbon dioxide recirculation passage 71 preferably extends downward from the outlets of the second chambers 55 toward the second vessel 72. Accordingly, when the electrolytic liquid should leak from any of the liquid chamber 53 to one of the second chambers 55, the leaked liquid stays at the bottom of the second vessel 72.

The gas components in the second vessel 72 flow from the top of the second vessel 72 to the blower 73. The blower 73 forwards the gas in the carbon dioxide recirculation passage 71 to the third vessel 74. A carbon dioxide return passage 75 is connected to the carbon dioxide recirculation passage 71 to return the circulating carbon dioxide gas to the inlet of the cathode chamber 11 of the electrolytic reduction device 2. The carbon dioxide return passage 75 is preferably connected to the third vessel 74 and the first supply passage 26. A pressure control valve 76 is provided in the carbon dioxide return passage 75.

The inlet of each liquid chamber 53 is connected to an electrolytic liquid tank 82 via an electrolytic liquid supply passage 81. The electrolytic liquid supply passage 81 is branched so as to correspond to the different liquid chambers 53. A pump 83, a flow rate control valve (pressure control valve) 84, and a temperature controller 85 are provided in the electrolytic liquid supply passage 81 in this order from the side of the electrolytic liquid tank 82. The pump 83 pumps the electrolytic liquid from the electrolytic liquid tank 82 to the liquid chambers 53. The temperature controller 85 adjusts the temperature of the electrolytic liquid. For example, the temperature controller 85 adjusts the temperature of the electrolytic liquid between the room temperature and 80° C. The outlets of the liquid chambers 53 are connected to the electrolytic liquid tank 82 via a first electrolytic liquid return passage 87. Thereby, the electrolytic liquid circulates through the electrolytic liquid tank 82, the electrolytic liquid supply passage 81, the liquid chambers 53, and the first electrolytic liquid return passage 87.

A part of the electrolytic liquid supply passage 81 located between the pump 83 and the flow rate control valve 84 is connected to the electrolytic liquid tank 82 via a recirculation passage 88. The recirculation passage 88 is provided with an electrolytic liquid sensor CS1 that detects information including at least one of the composition and concentration of the electrolytic liquid passing through the recirculation passage 88. The electrolytic liquid sensor CS1 may be, for example, an absorption photometer or a conductivity sensor. The absorption photometer may be a UV-visible light spectrophotometer.

The electrolytic liquid tank 82 is connected to a high-concentration electrolytic liquid tank 92 via an electrolytic liquid supply passage 91. The high-concentration electrolytic liquid tank 92 stores high-concentration electrolytic liquid. The high-concentration electrolytic liquid has higher concentrations of the electrolyte and a compound that adsorbs and desorbs protons by oxidation-reduction (which will be discussed later) than the electrolytic liquid stored in the electrolytic liquid tank 82. The electrolytic liquid supply passage 91 is provided with a pump 93 that feeds the high-concentration electrolytic liquid from the high-concentration electrolytic liquid tank 92 to the electrolytic liquid tank 82.

The bottom of the second vessel 72 is connected to the electrolytic liquid tank 82 via a second electrolytic liquid return passage 95. A pump 96 is provided in the second electrolytic liquid return passage 95 to deliver the electrolytic liquid from the second vessel 72 to the electrolytic liquid tank 82. As a result, the electrolytic liquid separated from the carbon dioxide gas and accumulated in the bottom of the second vessel 72 is returned to the electrolytic liquid tank 82 via the second electrolytic liquid return passage 95.

The top part of the electrolytic liquid tank 82 is connected to a part of the second producer gas outlet passage 66 located between the pressure control valves 68 and 69 via a gas return passage 97. A temperature controller 98 is provided in the gas return passage 97. The gas-phase pressure of the electrolytic liquid tank 82 is controlled by the pressure control valve 69, and the gas in the electrolytic liquid tank 82 flows to the second producer gas outlet passage 66.

The first vessel 65 and the third vessel 74 are provided with pressure sensors PS1 and PS2, respectively, for measuring the internal pressures of the gas phase portions of the respective vessels. A pressure sensor PS3 for measuring the internal pressure is provided in the part of the electrolytic liquid supply passage 81 located between the flow rate control valve 84 and the end part thereof on the side of the liquid chambers 53. Further, the electrolytic liquid tank 82 is provided with a pressure sensor PS4 for measuring the internal pressure of the gas phase portion therein. A flow rate

sensor FS1 is provided in a part of the mixed gas inlet passage 62 closer to the first chamber 54 than the blower 63. A flow rate sensor FS2 is provided in a part of the carbon dioxide recirculation passage 71 located between the blower 73 and the third vessel 74. A flow rate sensor FS3 is provided in a part of the electrolytic liquid supply passage 81 located between the pump 83 and the flow rate control valve 84. The electrolytic liquid tank 82 is internally provided with a temperature sensor TS1 that measures the temperature of the charge liquid therein. The pressure sensors PS1-PS4, the flow rate sensors FS1-FS3, and temperature sensor TS1 are connected to the control unit 7. In another embodiment, the pressure sensor PS1 is provided in a part of the mixed gas inlet passage 62 located between the blower 63 and the first chambers 54. The pressure sensor PS3 may also be provided in the first electrolytic liquid return passage 87.

The electrolytic liquid is composed of a solute and a solvent in which the solute is dissolved. When dissolved in the solvent, the solute produces either carbonic acid, or produces hydrogen carbonate ions and carbonate ions by ionization. The solute may include, for example, at least one selected from the group consisting of a carbonate or bicarbonate of an alkaline metal and a carbonate or bicarbonate of an alkaline earth metal. For instance. the solute may be selected from $NaHCO_3$, $KHCO_3$, $LiHCO_3$, $Na_2CO_3$, $K_2CO_3$, and $Li_2CO_3$. The solvent may be water.

Preferably, a compound that adsorbs and desorbs protons by oxidation-reduction is dissolved in the electrolytic liquid. The compound is preferably an organic compound having an oxidation-reduction potential of-1.0 V to 1.0 V based on the standard hydrogen electrode potential at pH 7. The compound is, for example, a quinone-based compound, an indophenol-based compound, an indigo-based compound, etc., and particularly preferably a quinone-based compound. The compound may be at least one selected from the group consisting chloramine-T, o-tolidine, 2,5-dihydroxy-1,4-benzoquinone, p-aminodimethylaniline, o-quinone, 1,2-diphenol, p-aminophenol, 1,4 -benzoquinone, 2,6,2'-trichloroindophenol, indophenol, phenol blue, 2,6-dichlorophenolindophenol (DCPIP), 2,6-dibromo-2'-methoxyindophenol, 1,2 -naphthoquinone, 1-naphthol-2-sulfonic acid indophenol, toluylene blue, dehydroascorbic acid/ascorbic acid, N-methylphenazinium methosulfate (PMS), thionine, phenazine ethosulfate, 1,4-naphthoquinone, toluidine blue, thioindigodisulfonate, methylene blue, 2-methyl-1,4-naphthoquinone (vitamin K3), indigotetrasulfonate, methylcapri blue, indigotrisulfonate, indigodisulfonate, 2-hydroxy-1,4-naphthoquinone, 2-amino-N-methylphenazine methosulfate, indigo monosulfonate, brilliant alizarin blue, 2-methyl-3-hydroxy-1,4-naphthoquinone, 9-methyl-isoalloxazine, anthraquinone-2, 6-disulfate, neutral blue, riboflavin, anthraquinone-1-sulfate, phenosafranin, safranin T, lipoic acid, acridine, neutral red, cystine/cysteine, benzylviologen, 1-aminoacridine, methylviologen, 2-aminoacridine, 2,8-diaminoacridine and 5-aminoacridine.

The quinone-based compound includes a hydroquinone-based compound containing a hydroxy group, and a benzoquinone-based compound obtained by oxidation of a hydroquinone-based compound and containing a carbonyl group. The quinone-based compound contained in the electrolytic liquid has a functional group with a relatively high electron-withdrawing property compared to oxygen. As a result, when the input material gas supplied to the electrolytic liquid contains not only carbon dioxide but also oxygen, due to the presence of the relatively powerful electron-withdrawing functional group of the quinone compound, the electrons generated by the electrode reaction on the side of the first gas diffusion electrode 51 are attracted more to the quinone-based compound than to the oxygen. In other words, the quinone compound is more easily reduced than oxygen so that the benzoquinone compound containing a carbonyl group is readily reduced to the hydroquinone compound containing a hydroxy group whereas oxygen is less readily reduced. This prevents the hydroquinone compound from being immediately oxidized by the oxygen after the reduction reaction. In other words, the hydroquinone compound with the electron-withdrawing group is resistant to oxidation by oxygen.

The functional group of the quinone compound may be a sulfonate, for example, The sulfonate has a sulfo group ($-SO_3$) and an alkaline metal element, and may be, for example, sodium sulfonate or potassium sulfonate. In addition, from the viewpoint of enhancing the electron-withdrawing property, the number of functional groups may be 1 or more. Moreover, it suffices if the number of functional groups is one or more, and from the viewpoint of enhancing the electron-withdrawing property, the number is preferably two or more and four or less.

The quinone-based compound becomes a hydroquinone-based compound that contains a hydroxy group in addition to the above mentioned functional groups after a reduction reaction. From the viewpoint of ensuring aromaticity, the number of hydroxy groups is preferably 2 or more and 4 or less. The hydroquinone compound may be, for example, disodium 4,5-dihydroxy-1,3-benzenedisulfonate (Tiron) or potassium hydroquinonesulfonate.

The quinone-based compound becomes a benzoquinone-based compound that contains a carbonyl group in addition to the above mentioned functional groups after an oxidation reaction. The hydroxy group of the benzoquinone-based compound is replaced by a carbonyl group by an oxidation reaction at the second gas diffusion electrode 52. The chemical formula (6) of the benzoquinone compound is given below. Here, $R_1$ to $R_4$ are H (hydrogen), functional groups, or the like.

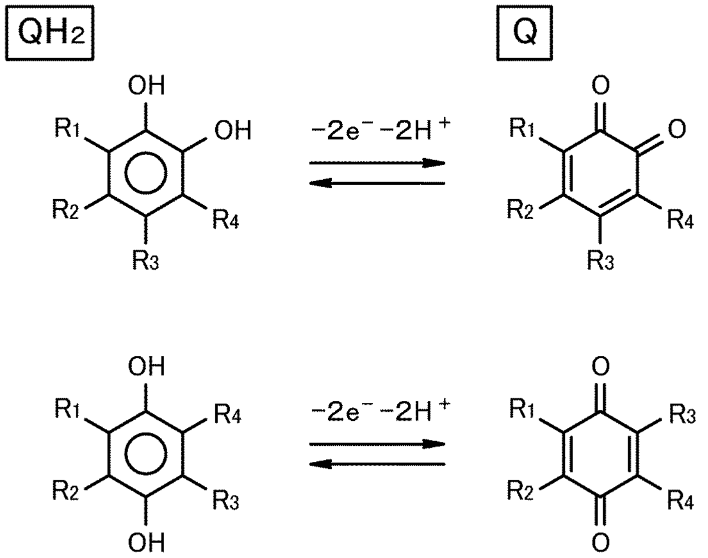

・・・(6)

In addition, the chemical formula (7) of 4,5-dihydroxy-1,3-benzenedisulfonic acid is given below as a specific example of a benzoquinone compound.

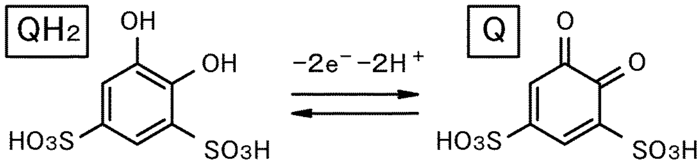

・・・(7)

Next, the mode of operation of the carbon dioxide separation device 3 will be discussed in the following with reference to FIG. 4. At the first gas diffusion electrode 51 serving as the cathode of each liquid chamber 53, the benzoquinone compound (Q) in the electrolytic liquid is reduced to a hydroquinone compound (QHz) as shown in chemical formula (8) given below.

$$Q + 2H^{+} + 2e^{-} \rightarrow QH_2 \ldots \qquad (8)$$

At this time, since protons ($H^+$) are adsorbed by the hydroquinone-based compound in the vicinity of the first gas diffusion electrode 51, the pH of the electrolyte in the vicinity of the first gas diffusion electrode 51 becomes relatively higher than before the reduction reaction. When the pH is relatively high, carbon dioxide becomes more soluble in water, which is a solvent for the electrolytic liquid, on account of the property thereof. As a result, the carbon dioxide in the producer gas in the first chambers 54 dissolves in the electrolytic liquid in the liquid chambers 53 via the first gas diffusion electrode 51. Thus, the carbon dioxide turns into bicarbonate ions in the electrolytic liquid by the reactions of the following chemical formulas (9) to (11). Chemical formulas (9) to (11) are equilibrium reactions.

$$CO_2 + H_2O \Leftrightarrow H_2CO_3 \ldots \qquad (9)$$

$$H_2CO_3 \Leftrightarrow H^{+} + HCO_3^{-} \ldots \qquad (10)$$

$$HCO_3^{-} \Leftrightarrow H^{+} + CO_3^{2-} \ldots \qquad (11)$$

At each second gas diffusion electrode 52 serving as the anode of the corresponding liquid chamber 53, the hydroquinone compound ($QH_2$) in the electrolytic liquid is oxidized to become a benzoquinone compound (Q) as shown in chemical formula (12) given below.

$$QH_2 \rightarrow Q + 2H^{+} + 2e^{-} \ldots \qquad (12)$$

At this time, since the protons ($H^+$) derived from the hydroquinone-based compound are released in the vicinity of the second gas diffusion electrode 52, the pH of the electrolyte in the vicinity of the second gas diffusion electrode

52 is relatively lower than before the oxidation reaction. When the pH is relatively low, the equilibrium state of the bicarbonate ions and carbonic acid in the chemical formulas (9) to (11) is shifted toward the carbonic acid side. This produces carbon dioxide. Thereby, the carbon dioxide in the electrolytic liquid is released to the second chambers 55 through the second gas diffusion electrode 52. In this manner, the carbon dioxide gas in the mixed gas in the first chambers 54 is separated into the second chamber 55 in a gaseous state. At this time, hydrocarbons, oxygen, hydrogen, etc. in the mixed gas are not dissolved in the electrolytic liquid and remain in the first chambers 54. Thereby, the carbon dioxide separation device 3 can separate the carbon dioxide from the mixed gas.

Due to the reduction-oxidization reaction of the quinone-based compound, the pH on the side of the first gas diffusion electrodes 51 becomes relatively high while the pH on the side of the second gas diffusion electrodes 52 becomes relatively low. Thereby, a pH gradient is created in the electrolytic liquid so that the hydrogen carbonate ions, carbonic acid, and carbonate ions are caused to move to the side of the second gas diffusion electrodes 52. Thereby, the gas flow rate of the carbon dioxide that can be separated into the second chamber 55 can be increased.

The mixed gas (producer gas) from which the carbon dioxide has been separated flows from the first chambers 54 to the first vessel 65 and then to the second producer gas outlet passage 66. The carbon dioxide gas separated into the second chambers 55 circulates through the carbon dioxide recirculation passage 71 and the second chambers 55. At this time, the electrolytic liquid is separated from the carbon dioxide gas in the second vessel 72 and returned to the electrolytic liquid tank 82 via the second electrolytic liquid return passage 95. The carbon dioxide gas flowing through the carbon dioxide recirculation passage 71 is returned to the electrolytic reduction device 2 via the carbon dioxide return passage 75 and the first supply passage 26 by opening the pressure control valve 76. The electrolytic reduction device 2 thus uses the carbon dioxide separated from the producer gas in the carbon dioxide separation device 3 as part of the input material thereof.

The control unit 7 detects the pressure PL1 of the first chambers 54, the pressure PL2 of the second chambers 55, the pressure PL3 of the liquid chambers 53, and the pressure PL4 of the electrolytic liquid tank 82 based on the signals from the pressure sensors PS1, PS2, PS3, and PS4, respectively. The control unit 7 may set the pressure of the first vessel 65 detected by the pressure sensor PS1 as the pressure PL1 of the first chambers 54, the pressure of the third vessel 74 detected by the pressure sensor PS2 as the pressure PL2 of the second chambers 55, and the pressure of the electrolytic liquid supply passage 81 detected by the pressure sensor PS3 as the pressure PL3 of the liquid chamber 53. The control unit 7 controls the pressure control valves 68, 76 and flow rate control valve 84 such that the pressure PL1 of the first chambers 54 is equal to or higher than the pressure PL3 of the liquid chambers 53, and the pressure PL3 of the liquid chambers 53 is equal to or higher than the pressure PL2 of the second chambers 55 ($PL1 \geqq PL3 \geqq PL2$). Further, the control unit 7 controls the pressure control valves 68, 69, 76 and the flow rate control valve 84 in such a manner that the pressure PL1 of the first chambers 54 is equal to or higher than the pressure PL3 of the liquid chambers 53, the pressure PL3 of the liquid chambers 53 is equal to or higher than the pressure PL4 of the electrolytic liquid tank 82, and the pressure PL4 of the electrolytic liquid tank 82 is equal to or higher than the pressure PL2 of the second chambers 55 ($PL1 \geqq PL3 \geqq PL4 \geqq PL2$). By setting the pressure PL1 of the first chambers 54 to be equal to or higher than the pressure PL3 of the liquid chambers 53, the electrolytic liquid in the liquid chambers 53 is prevented from leaking into the first chambers 54 via the first gas diffusion electrodes 51. Further, by setting the pressure PL3 of the liquid chambers 53 to be equal to or higher than the pressure PL4 of the electrolytic liquid tank 82, even if gas should migrate into the liquid chambers 53 from the first chambers 54, the gas and the electrolytic liquid in the electrolytic liquid tank 82 are favorably separated from each other. In addition, by setting the pressure PL3 of the liquid chambers 53 to be equal to or higher than the pressure PL2 of the second chambers 55, the carbon dioxide in the electrolytic liquid can easily pass through the second gas diffusion electrodes 52 and be released into the second chamber 55. The electrolytic liquid leaked into the second chambers 55 is separated by the second vessel 72 and returned to the electrolytic liquid tank 82.

The control unit 7 acquires the concentration of the quinone compound in the electrolytic liquid based on the signal from the electrolytic liquid sensor CS1, and drives the pump 93 so as to increase the concentration when the concentration of the quinone compound is equal to or lower than a predetermined determination value. A high-concentration electrolytic liquid is supplied from the high-concentration electrolytic liquid tank 92 to the electrolytic liquid tank 82. The high-concentration electrolytic liquid has a higher concentration of the quinone-based compound and the electrolyte than the electrolytic liquid supplied to the liquid chambers 53. As a result, the concentration of the quinone-based compound in the electrolytic liquid increases, and the concentration of the quinone-based compound in the electrolyte liquid is maintained within a predetermined range.

As shown in FIG. 1, the producer gas from which carbon dioxide has been separated in the carbon dioxide separation device 3 (hereinafter referred to as the first processed gas) passes from the second producer gas outlet passage 66 to the water removal device 4 via a passage 101. The passage 101 is provided with a compressor 102 for pumping the first processed gas to the water removal device 4. The water removal device 4 separates water from the first processed gas.

In this embodiment, the water removal device 4 includes a first water removal device 4A and a second water

removal device 4B which are provided in parallel with each other. The first and second water removal devices 4A, 4B may be adsorption towers filled with a moisture adsorbent. The moisture adsorbent releases (desorbs) moisture by being subjected to heat treatment. The moisture adsorbent is preferably a desiccant such as crystalline zeolite (molecular sieve).

The inlet of the first water removal device 4A is connected to the passage 101 via a passage 103. A passage 104 is connected to the outlet of the first water removal device 4A. The inlet of the second water removal device 4B is connected to the passage 101 via a passage 105. A passage 106 is connected to the outlet of the second water removal device 4B. The passage 104 and passage 106 are connected to the inlet of the producer gas separation device 5 via a passage 107. The passages 103 to 106 are each provided with an on/off valve 111 to 114, respectively.

Further, the first and second water removal devices 4A and 4B are connected to a purge gas recirculation passage 116. The purge gas recirculation passage 116 includes a passage 121 extending from a part of the passage 103 located between the on/off valve 111 and the first water removal device 4A, a passage 122 extending from a part of the passage 105 located between the on/off valve 113 and the second water removal device 4B, a recirculation passage 123 connected to both the passages 121 and 122, a passage 124 connected between the recirculation passage 123 and a part of the passage 104 located between the first water removal device 4A and the on/off valve 112, and a passage 125 connected between the recirculation passage 123 and a part of the passage 106 located between the second water removal device 4B and the on/off valve 114.

The passages 121, 122, 124, 125 are provided with on/off valves 126, 127, 128, 129, respectively. The recirculation passage 123 is provided with a first heat exchanger 131, a cooler 132, a gas-liquid separation device 133, a blower 134, a flow rate control valve 135, a first heat exchanger 131, and a combustion furnace 6 in this order from the side of the passage 121. A part of the recirculation passage 123 located between the flow rate control valve 135 and the first heat exchanger 131 is connected to the passage 107 via a passage 138. A flow rate control valve 139 is provided in the passage 107. A part of the recirculation passage 123 located between the blower 134 and the flow rate control valve 135 is connected to the passage 101 via a return passage 141.

The combustion chamber of the combustion furnace 6 is connected to the anode outlet passage 42 of the electrolytic reduction device 2 via a passage 142. A second heat exchanger 143 is provided in the passage 142. The hydrogen and carbon monoxide separated in the producer gas separation device 5 flows through a passage 144 which is connected to a part of the passage 142 located between the electrolytic reduction device 2 and the second heat exchanger 143. An oxygen supply 147 is connected, via a flow rate control valve 146, to a part of the passage 142 located between the electrolytic reduction device 2 and the second heat exchanger 143. A fuel supply 149 is connected to the passage 144 via a flow rate control valve 148. The fuel supply 149 may be a tank or pipeline that supplies a gaseous fuel such as natural gas or hydrogen. The gaseous fuel supplied from the fuel supply 149 mixes with the hydrogen and carbon monoxide flowing through the passage 144. The oxygen is mixed with a fuel containing hydrogen and carbon monoxide in the passage 142 and supplied to the combustion furnace 6 after being heated in the second heat exchanger 143.

The combustion furnace 6 is preferably an oxygen combustion furnace. In the combustion chamber of the combustion furnace 6, the oxygen supplied from the passage 142 and the fuel containing hydrogen and carbon monoxide are combusted. The exhaust gas generated by combustion mainly consists carbon dioxide and water. The exhaust gas is supplied from the combustion furnace 6 to the first supply passage 26 via an exhaust gas passage 151. The exhaust gas passage 151 may be provided with a blower 150 that forwards the exhaust gas to the first supply passage 26. Thus, the carbon dioxide contained in the exhaust gas is reused as a part of the input material of the electrolytic reduction device 2. The exhaust gas passage 151 passes through the second heat exchanger 143. As a result, the exhaust gas and the gas containing fuel and oxygen flowing through the passage 142 exchange heat in the second heat exchanger 143, and the temperature of the gas flowing through the passage 142 rises.

The first and second water removal devices 4A and 4B perform an adsorption step of adsorbing water from the producer gas and a desorption step of releasing the water adsorbed in the adsorption step by receiving the heat generated in the combustion furnace 6. While one of the first and second water removal devices 4A, 4B performs the adsorption step, the other of the first and second water removal devices 4A, 4B performs the desorption step. The first and second water removal devices 4A and 4B are preferably switched between the adsorption process and the desorption process at predetermined time intervals.

By opening the on/off valves 111, 112, 127, 129 and closing the on/off valves 113, 114, 126, 128, the first water removal device 4A performs the adsorption process and the second water removal device 4B performs the desorption process. As a result, the first processed gas flowing through the passage 101 is dehydrated by passing through the first water removal device 4A. The first processed gas from which water has been removed by the first water removal device 4A or the second water removal device 4B is referred to as a second processed gas. Most of the second processed gas is forwarded to the producer gas separation device 5 via the passage 107. At this time, a part of the second processed gas passes through the passage 138 and is supplied to the recirculation passage 123 by opening the flow rate control valve 139. A part of the second processed gas circulates through the purge gas recirculation passage 116 as purge gas.

The purge gas flowing through the recirculation passage 123 is heated in the combustion furnace 6. At this

time, the purge gas exchanges heat with the fuel, oxygen, and exhaust gas without being mixed therewith. The purge gas heated in the combustion furnace 6 is supplied via the passage 125 to the second water removal device 4B. As a result, the moisture adsorbent of the second water removal device 4B is heated by the purge gas, and moisture is desorbed from the moisture adsorbent. Thereby, the moisture adsorbent of the second water removal device 4B is regenerated.

The moisture desorbed from the moisture adsorbent passes through the first heat exchanger 131 and the cooler 132 together with the purge gas, and is cooled. The purge gas containing moisture is cooled by exchanging heat with the purge gas that has passed through the flow rate control valve 135 in the first heat exchanger 131. Also, the purge gas containing moisture is further cooled in the cooler 132 to liquefy the moisture.

In the gas-liquid separation device 133, liquid water is separated from the purge gas containing moisture that has passed through the cooler 132. The liquid water separated by the gas-liquid separation device 133 is supplied to the second supply passage 33 via a passage 152 and forwarded to the anode chamber 12 of the electrolytic reduction device 2.

By opening the on/off valves 113, 114, 126, 128 and closing the on/off valves 111, 112, 127, 129, the second water removal device 4B performs the adsorption process and the first water removal device 4A performs the desorption process. As a result, the first processed gas flowing through the passage 101 is dehydrated in the second water removal device 4B and then forwarded to the producer gas separation device 5. Also, the heated purge gas is supplied to the first water removal device 4A to regenerate the moisture adsorbent of the first water removal device 4A.

The producer gas separation device 5 separates hydrocarbons from the second processed gas. The producer gas separation device 5 may be a cryogenic separator. In this embodiment, the producer gas separation device 5 separates methane and ethylene from the second processed gas individually. The off-gas obtained by separating methane and ethylene from the second processed gas mainly consists of carbon monoxide and hydrogen. The off-gas is forwarded to the combustion furnace 6 via the passage 144 and passage 142 and used as fuel. Incidentally, when carbon monoxide is the target substance, hydrogen and carbon monoxide may also be recovered.

A flow rate sensor FS4 for measuring the flow rate of the gas supplied to the cathode chamber 11 of the electrolytic reduction device 2 is provided at an end point of the first supply passage 26 adjacent to the electrolytic reduction device 2. The cathode outlet passage 39 is provided with a flow rate sensor FS5 for measuring the flow rate of the producer gas passing therethrough and a gas composition sensor CS2 for detecting the composition of the producer gas. The carbon dioxide return passage 75 is provided with a flow rate sensor FS6 that measures the flow rate of the carbon dioxide gas passing therethrough. A flow rate sensor FS7 for measuring the flow rate of the second processed gas passing through the passage 138 is provided in a part of the passage 138 located between the flow rate control valve 139 and the passage 107. A flow rate sensor FS8 is provided in a part of the recirculation passage 123 located between the blower 134 and the flow rate control valve 135 to measure the flow rate of the purge gas passing therethrough. A flow rate sensor FS9 for measuring the flow rate of the off-gas passing through the passage 144 is provided in a part of the passage 144 located between the fuel supply 149 and the producer gas separation device 5. A temperature sensor TS2 for measuring the temperature of the purge gas passing through the recirculation passage 123 is provided in a part of the recirculation passage 123 located between the combustion furnace 6 and a junction between the passages 124 and 125. An oxygen concentration sensor OS1 for measuring the oxygen concentration in the gas containing fuel and oxygen supplied to the combustion furnace 6 is provided at an end point of the passage 142 adjacent to the second heat exchanger 143.

The control unit 7 acquires the flow rate and composition of the producer gas flowing through the cathode outlet passage 39 based on the signals from the flow rate sensor FS5 and the gas composition sensor CS2, and controls the electric current supplied by the DC power supply 19 based on the flow rate and composition of the producer gas. The control unit 7 preferably increases the current supplied by the DC power supply 19 as the flow rate of the producer gas decreases or as the concentration of the ethylene decreases.

The control unit 7 acquires the flow rate of the carbon dioxide flowing through the carbon dioxide return passage 75 based on the signal from the flow rate sensor FS6, and controls the opening of the flow rate control valve 29 based on the flow rate of the carbon dioxide flowing through the carbon dioxide return passage 75. The control unit 7 preferably increases the opening of the flow rate control valve 29 as the flow rate of the carbon dioxide flowing through the carbon dioxide return passage 75 decreases.

The control unit 7 preferably acquires the flow rate of the purge gas flowing through the recirculation passage 123 based on the signal from the flow rate sensor FS8, and controls the opening of the flow rate control valve 139 based on the flow rate of the purge gas flowing through the recirculation passage 123. The control unit 7 preferably increases the opening of the flow rate control valve 139 as the flow rate of the purge gas flowing through the recirculation passage 123 decreases.

The control unit 7 acquires the temperature of the purge gas supplied to the first or second water removal device 4A, 4B based on the signal from the temperature sensor TS2, and controls the opening of the flow rate control valves 146, 148 based on the temperature of the purge gas. The control unit 7 preferably increases the opening of the

flow rate control valves 146 and 148 when the temperature of the purge gas is equal to or lower than the predetermined lower limit.

The control unit 7 preferably acquires the oxygen concentration of the gas flowing through the passage 142 based on the signal from the oxygen concentration sensor OS1, and controls the opening of the flow rate control valve 146 based on the oxygen concentration. The control unit 7 preferably increases the opening of the flow rate control valve 146 when the oxygen concentration of the gas flowing through the passage 142 is equal to or lower than a predetermined lower limit.

The control unit 7 preferably acquires the flow rate of the off-gas flowing through the passage 144 based on the signal from the flow rate sensor FS9, and controls the opening of the flow rate control valve 148 based on the flow rate of the off-gas. The control unit 7 preferably increases the opening of the flow rate control valve 148 as the flow rate of the off-gas decreases.

The effect of the carbon dioxide recovery system 1 will be discussed in the following. Since the carbon dioxide in the producer gas discharged from the electrolytic reduction device 2 is separated from the producer gas in a gaseous state by the carbon dioxide separation device 3, the carbon dioxide can be easily recovered and reused. The carbon dioxide separation device 3 based on electrochemistry can separate carbon dioxide from hydrocarbons with less energy than the separation method using an amine compound. Thereby, in the carbon dioxide recovery system 1, energy efficiency can be improved.

The moisture adsorbent of the water removal device 4 is regenerated by using the combustion heat of the off-gas containing carbon monoxide and hydrogen separated from the producer gas by using the oxygen generated at the anode 17 of the electrolytic reduction device 2. Thereby, the energy efficiency of the carbon dioxide recovery system 1 can be improved. In addition, since the carbon dioxide and water generated by the combustion of the off-gas are reused as the input materials for the electrolytic reduction device 2, the amount of carbon dioxide emitted to the external environment can be reduced.

The water removal device 4 has first and second water removal devices 4A, 4B provided in parallel to each other. Therefore, one of the first and second water removal devices 4A, 4B can perform the adsorption step while the other performs the desorption step so that a continuous operation of the electrolytic reduction device 2 is made possible.

The carbon dioxide separation device 3 includes a stack 59 consisting of the first units and second units that are alternately arranged in a spaced apart relationship, each first unit including the first gas diffusion electrode 51, liquid chamber 53, and second gas diffusion electrode 52 that are arranged in this order, each second unit including the second gas diffusion electrode 52, liquid chamber 53, and first gas diffusion electrode 51 that are arranged in this order. Thereby, the carbon dioxide separation device 3 can be formed compactly. The liquid chambers 53 are connected to the electrolytic liquid tank 82 to circulate the electrolytic liquid. Therefore, the electrolytic liquid can be easily replenished and replaced, and the quality of the electrolytic liquid can be maintained. This keeps the carbon dioxide separation capacity at a steady level.

(Second Embodiment)

Next, a carbon dioxide recovery system 200 according to a second embodiment of the present invention will be described in the following. As shown in FIG. 5, the carbon dioxide recovery system 200 of the second embodiment differs from the carbon dioxide recovery system 1 of the first embodiment in that the passage 142 has a carbon dioxide separation device 201. The configuration of the carbon dioxide recovery system 200 of the second embodiment is otherwise similar to that of the carbon dioxide recovery system 1 of the first embodiment.

The carbon dioxide separation device 201 has the same configuration as the carbon dioxide separation device 3 shown in FIG. 3. The carbon dioxide separation device 201 separates carbon dioxide from the gas discharged from the anode outlet passage 42 of the electrolytic reduction device 2. The gas discharged from the anode outlet passage 42 of the electrolytic reduction device 2 contains oxygen as a main component and may contain a very small amount of carbon dioxide. The gas discharged from the anode outlet passage 42 of the electrolytic reduction device 2 is supplied to the first chambers 54 via the mixed gas inlet passage 62 of the carbon dioxide separation device 201 to separate the carbon dioxide. The gas discharged from the first chambers 54 of the carbon dioxide separation device 201 is referred to as a third processed gas. As shown in FIG. 5, the main component of the third processed gas is oxygen. The third processed gas is passed through second heat exchanger 143 via the passage 142 before being fed to the combustion furnace 6.

The carbon dioxide return passage 75 of the carbon dioxide separation device 201 is connected to the first supply passage 26 via a carbon dioxide return passage 202. As a result, the carbon dioxide separated from the gas discharged from the anode outlet passage 42 of the electrolytic reduction device 2 is returned to the electrolytic reduction device 2 via the carbon dioxide return passage 202 and the first supply passage 26 to be used as a part of the input material.

A part of the passage 142 located between the electrolytic reduction device 2 and the carbon dioxide separation device 201 is provided with a flow rate sensor FS10 for measuring the flow rate of the gas flowing through this passage

142 and a gas composition sensor CS3 for detecting the composition of the gas flowing through this passage 142. The carbon dioxide return passage 202 is provided with a flow rate sensor FS11 for measuring the flow rate of the carbon dioxide gas flowing through this carbon dioxide return passage 202.

The control unit 7 preferably acquires the flow rate and composition of the gas flowing through the passage 142 based on the signals from the flow rate sensor FS10 and the gas composition sensor CS3, and controls the current supplied by the DC power supply 19 based on the flow rate and composition of the gas. The control unit 7 preferably increases the current supplied by the DC power supply 19 as the gas flow rate decreases or as the oxygen concentration decreases.

The control unit 7 acquires the flow rate of the carbon dioxide flowing through the carbon dioxide return passage 202 based on the signal from the flow rate sensor FS11, and adjusts the opening of the flow rate control valve 29 based on the flow rate of the carbon dioxide flowing through the carbon dioxide return passage 202. The control unit 7 preferably increases the opening of the flow rate control valve 29 as the flow rate of the carbon dioxide flowing through the carbon dioxide return passage 202 decreases.

According to the carbon dioxide recovery system 200 of the second embodiment, even if the carbon dioxide leaks from the cathode chamber 11 to the anode chamber 12 through the membrane electrode assembly 10 of the electrolytic reduction device 2, the leaked carbon dioxide can be recovered in the carbon dioxide separation device 201 and reused as an input material for the electrolytic reduction device 2.

(Third Embodiment)

In the third embodiment of the present invention, the carbon dioxide separation device 3 of the first and second embodiments is replaced with a carbon dioxide separation device 300. The carbon dioxide separation device 300 differs from the carbon dioxide separation device 3 in the configuration of a part of the structure thereof. In the following description of the carbon dioxide separation device 300, the parts corresponding to those of the carbon dioxide separation device 3 are denoted by like reference numerals, and the description of such parts may be omitted in the following description.

As shown in FIG. 6, in the carbon dioxide separation device 300, the inlets of the first chambers 54 are positioned above the outlets thereof. The first vessel 65 functions as a gas-liquid separation device. The bottom of the first vessel 65 is positioned below the outlets of the first chambers 54 and the first producer gas outlet passages 64 extend downward from the outlets of the respective first chambers 54 toward the first vessel 65. Accordingly, when the electrolytic liquid should leak from any of the liquid chambers 53 to the adjacent first chamber 54, the leaked liquid stays at the bottom of the first vessel 65.

The gas components in the first vessel 65 flow from the top of the first vessel 65 to the second producer gas outlet passage 66. The bottom part of the first vessel 65 is connected to the electrolytic liquid tank 82 via a second electrolytic liquid return passage 95. The second electrolytic liquid return passage 95 is provided with a pump 96 that delivers the electrolytic liquid from the first vessel 65 to the electrolytic liquid tank 82. As a result, the electrolytic liquid separated from the producer gas and accumulated at the bottom of the first vessel 65 is returned to the electrolytic liquid tank 82 via the second electrolytic liquid return passage 95.

The control unit 7 controls the pressure control valves 68, 69, 76 in such a manner that the pressure PL2 of the second chambers 55 is equal to or higher than the pressure PL3 of the liquid chambers 53, and the pressure PL3 of the liquid chambers 53 is equal to or higher than the pressure PL1 of the first chambers 54 ($PL2 \geqq PL3 \geqq PL1$). When the pressure PL2 of the second chambers 55 becomes equal to or higher than the pressure PL3 of the liquid chambers 53, the electrolytic liquid in the liquid chambers 53 is prevented from leaking into the second chambers 55 through the second gas diffusion electrodes 52. The electrolytic liquid that may be leaked into the first chambers 54 is separated by the first vessel 65 and returned to the electrolytic liquid tank 82. Further, the control unit 7 may control the pressure control valves 68, 69, 76 and the flow rate control valve 84 in such a manner that the pressure PL2 of the second chambers 55 is equal to or higher than the pressure PL3 of the liquid chambers 53, the pressure PL3 of the liquid chambers 53 is equal to or higher than the pressure PL4 of the electrolytic liquid tank 82, and the pressure PL4 of the electrolytic liquid tank 82 is equal to or higher than the pressure PL1 of the first chambers 54 ($PL2 \geqq PL3 \geqq PL4 \geqq PL1$).

(Fourth Embodiment)

In the fourth embodiment of the present invention, the carbon dioxide separation device 3 of the first and second embodiments is replaced with a carbon dioxide separation device 400. As shown in FIG. 7, the carbon dioxide separation device 400 includes a carbon dioxide gas absorption unit 401, an electrochemical cell 402, a first passage 403, a second passage 404, a third passage 405, and a gas-liquid separation device. 406.

The carbon dioxide gas absorption unit 401 brings an electrolytic liquid containing a compound that adsorbs and desorbs protons by oxidation-reduction into contact with the mixed gas to cause the electrolytic liquid to absorb the

carbon dioxide in the mixed gas. The electrolytic liquid may be the same as the electrolytic liquid flowing through the carbon dioxide separation device 3 of the first embodiment. The electrolytic liquid may be, for example, potassium hydroquinone sulfonate. The carbon dioxide gas absorption unit 401 may bring the mixed gas and the electrolytic liquid into contact with each other by, for example, countercurrent contact, parallel current contact, or bubbling. In the carbon dioxide gas absorption unit 401, the electrolytic liquid may be sprayed into the mixed gas, or the mixed gas and the electrolytic liquid may be brought into contact with each other by using a hollow fiber membrane.

The carbon dioxide gas absorption unit 401 is provided with a gas inlet 411 to receive the mixed gas, a gas outlet 412 to discharge the mixed gas, an electrolytic liquid inlet 413 to receive the electrolytic liquid, and an electrolytic liquid outlet 414 to discharge the electrolytic liquid.

The electrochemical cell 402 is partitioned into a cathode chamber 417 and an anode chamber 418 by a membrane electrode assembly 416. The membrane electrode assembly 416 includes an electrolytic liquid membrane 416A, and a cathode 416B and an anode 416C provided on either side of the electrolytic liquid membrane 416A, and is connected to a power supply 419. The cathode 416B is located in a cathode chamber 417 and the anode 416C is located in an anode chamber 418. The cathode 416B is connected to the negative terminal of the power supply 419 and the anode 416C is connected to the positive terminal of the power supply 419. The electrolytic liquid membrane 416A, cathode 416B, and anode 416C may have the same configurations as the electrolytic liquid membrane 15, cathode 16, and anode 17 of the first embodiment, respectively. Also, the cathode 416B and the anode 416C may have the same configurations as the first gas diffusion electrode 51 and the second gas diffusion electrode 52 of the first embodiment, respectively.

The first passage 403 communicates the electrolytic liquid outlet 414 of the carbon dioxide gas absorption unit 401 with the anode chamber 418 of the electrochemical cell 402 to allow the electrolytic liquid to flow from the carbon dioxide gas absorption unit 401 to the anode chamber 418. A pump for transporting the electrolytic liquid may be provided in the first passage 403.

A second passage 404 communicates the anode chamber 418 with the cathode chamber 417 to allow the electrolytic liquid to flow from the anode chamber 418 to the cathode chamber 417. A gas-liquid separation device 406 is provided in the second passage 404 to separate the electrolytic liquid and the gas component in the electrolytic liquid from each other.

The third passage 405 communicates the cathode chamber 417 of the electrochemical cell 402 with the electrolytic liquid inlet 413 of the carbon dioxide gas absorption unit 401 to allow the electrolytic liquid to flow from the cathode chamber 417 to the carbon dioxide gas absorption unit 401. The third passage 405 may be provided with a pump for transporting the electrolytic liquid.

In the carbon dioxide separation device 400, the electrolytic liquid circulates through the carbon dioxide gas absorption unit 401, the first passage 403, the anode chamber 418, the second passage 404, the gas-liquid separation device 406, the cathode chamber 417, and the third passage 405 in this order. The electrolytic liquid is reduced and the pH level thereof rises in the cathode chamber 417.

In the carbon dioxide gas absorption unit 401, the carbon dioxide gas in the mixed gas is dissolved in the electrolytic liquid due to the contact between the electrolytic liquid having a relatively high pH and the mixed gas. The chemical reactions at this time are similar to those of chemical formulas (9) to (11) mentioned above. The carbon dioxide takes the form of bicarbonate ions in the electrolytic liquid so that the carbon dioxide gas is removed from the mixed gas. The mixed gas from which the carbon dioxide gas has been removed is discharged from the gas outlet 412 and forwarded to the water removal device 4 via the passage 101.

The electrolytic liquid in which the carbon dioxide is dissolved is forwarded to the anode chamber 418 via the first passage 403. In the anode chamber 418, the electrolytic liquid is oxidized, and the pH level of the electrolytic liquid is lowered. The pH of the electrolytic liquid flowing from the anode chamber 418 to the second passage 404 is lower than the pH of the electrolytic liquid flowing from the cathode chamber 417 to the third passage 405. When the pH of the electrolytic liquid drops, hydrogen carbonate ions in the electrolytic liquid receive protons and change into carbon dioxide. The chemical reactions at this time are similar to those of chemical formulas (9) to (11) mentioned above. As a result, the carbon dioxide turns into gas and is desorbed from the electrolytic liquid.

The carbon dioxide gas and the electrolytic liquid separated from the electrolytic liquid in the anode chamber 418 are forwarded to the gas-liquid separation device 406 via the second passage 404. The gas-liquid separation device 406 separates the carbon dioxide gas and the electrolytic liquid from each other. The electrolytic liquid flows from the gas-liquid separation device 406 to the cathode chamber 417 via the second passage 404. The carbon dioxide gas flows from the gas-liquid separation device 406 to the electrolytic reduction device 2 via the carbon dioxide return passage 75. In the cathode chamber 417, the electrolytic liquid is reduced and the pH thereof rises so as to be able to absorb the carbon dioxide gas once again.

According to the carbon dioxide separation device 400 described above, as compared with the carbon dioxide separation device 3 of the first embodiment, the potential difference between the cathode 416B and the anode 416C can be reduced so that the energy efficiency can be improved.

FIG. 8 shows a more detailed configuration of the carbon dioxide separation device 400 described above. The carbon dioxide gas absorption unit 401 has a vertically extending housing 431. An electrolytic liquid is stored in the bottom of the housing 431. A bottom part of the housing 431 is provided with a gas inlet 411 through which mixed gas is supplied. An upper end part of the housing 431 is provided with a gas outlet 412 through which the mixed gas is discharged. Further, the carbon dioxide gas absorption unit 401 is provided with a nozzle 432 positioned in an upper part of the housing 431 for injecting the electrolytic liquid, a fourth passage 433 for supplying the electrolytic liquid stored in the bottom part of the housing 431 to the nozzle 432, and a tray 434 provided between the gas inlet 411 and the nozzle 432 in the housing 431 to temporarily store the electrolytic liquid injected from the nozzle 432. The tray 434 may consist of a plurality of trays 434. The electrolytic liquid outlet 414 may be provided in the tray 434.

The third passage 405 is connected to the fourth passage 433. A junction of the fourth passage 433 with the third passage 405 serves as the electrolytic liquid inlet 413. The third passage 405 is provided with a first flow rate control valve 436A. A part of the fourth passage 433 located more to the bottom side of the housing 431 than the third passage 405 is provided with a second flow rate control valve 436B. A first pump 438A is provided in a part of the fourth passage 433 located between the third passage 405 and the nozzle 432. The electrolytic liquid stored in the bottom part of the housing 431 is supplied to the nozzle 432 by the first pump 438A via the fourth passage 433, and the electrolytic liquid is injected from the nozzle 432. The electrolytic liquid injected from the nozzle 432 flows downward inside the housing 431, passes through the tray 434, and is stored in the bottom of the housing 431.

A water supply valve 439 for supplying water may be provided at the bottom of the housing 431. The water is supplied to the bottom of housing 431 via the water supply valve 439 to dilute the electrolytic liquid. A mist eliminator 441 is provided at the gas outlet 412. The mist eliminator 441 collects electrolytic liquid solution mist floating in the discharged mixed gas.

The electrochemical cell 402 is partitioned into a plurality of cathode chambers 417 and a plurality of anode chambers 418 by a plurality of membrane electrode assemblies 416. The membrane electrode assemblies 416 are arranged in parallel with each other at regular intervals. Each adjacent pair of the membrane electrode assemblies 416 oppose the corresponding cathode 416B and the corresponding anode 416C, respectively. Thus, the anode chambers 418 and the cathode chambers 417 are alternately arranged in the electrochemical cell 402.

The end of the first passage 403 on the side of the anode chambers 418 is branched and connected to the respective anode chambers 418. The end of the second passage 404 on the side of the anode chambers 418 is branched and connected to the respective anode chambers 418. The end of the second passage 404 on the side of the cathode chambers 417 is branched and connected to the respective cathode chambers 417. The end of the third passage 405 on the side of the cathode chambers 417 is branched and connected to the respective cathode chambers 417.

A first tank 405A and a second pump 438B are provided in the third passage 405 in this order from the side of the electrochemical cell 402. A first flow rate control valve 436A is provided between the second pump 438 B and the electrolytic liquid inlet 413. The first tank 405A temporarily stores the electrolytic liquid discharged from the cathode chambers 417.

The first passage 403 is provided with a second tank 403A, a third pump 438C, and a third flow rate control valve 436C in this order from the side of the electrolytic liquid outlet 414. The second tank 403A temporarily stores the electrolytic liquid discharged from the electrolytic liquid outlet 414. Also, the electrolytic liquid collected in the mist eliminator 441 flows into the second tank 403A.

The second passage 404 is provided with a gas-liquid separation device 406, a fourth pump 438D, and a fourth flow rate control valve 436D in this order from the side of the anode chamber 418. A gas outlet 412 of the gas-liquid separation device 406 is connected to the carbon dioxide return passage 75 via a fifth flow rate control valve 43 6E.

A part of the third passage 405 located between the first flow rate control valve 436A and the fourth passage 433 is provided with a flow meter FS21 for measuring the flow rate of the electrolytic liquid flowing therein. A flow meter FS22 is provided in a part of the fourth passage 433 located between the first pump 438A and the nozzle 432 to measure the flow rate of the electrolytic liquid flowing therein. A part of the first passage 403 located between the third flow rate control valve 436C and the anode chamber 418 is provided with a flow meter FS23 for measuring the flow rate of the electrolytic liquid flowing therein. A flow meter FS24 is provided in a part of the second passage 404 located between the fourth flow rate control valve 436D and the cathode chambers 417 to measure the flow rate of the electrolytic liquid flowing therein.

The housing 431 is provided with a pH sensor pHS1 that measures the pH of the electrolytic liquid stored in the bottom part of the housing 431. A pH sensor pHS2 is provided in the part of the fourth passage 433 located between the first pump 438A and the nozzle 432 to measure the pH of the electrolytic liquid flowing therein. The third passage 405 is provided with a pH sensor pHS3 that measures the pH of the electrolytic liquid flowing through the third passage 405. The pH sensor pHS3 may also be provided, for example, in the first tank 405A. The first passage 403 is provided with a pH sensor pHS4 that measures the pH of the electrolytic liquid flowing through the first passage 403. The pH sensor pHS4 may also be provided, for example, in the second tank 403A.

The housing 431 is provided with a liquid level gauge LS1 for measuring the liquid level of the electrolytic liquid

stored in the bottom part thereof. The first tank 405A is provided with a liquid level gauge LS2 for measuring the liquid level of the electrolytic liquid stored therein. The second tank 403A is provided with a liquid level gauge LS3 for measuring the liquid level of the electrolytic liquid stored therein. The gas-liquid separation device 406 is provided with a liquid level gauge LS4 for measuring the liquid level of the electrolytic liquid stored therein. Further, the gas-liquid separation device 406 is provided with a pressure sensor PS11 for measuring the pressure of the gas phase portion therein.

The control unit 7 is connected to the power supply 419, first to fourth pumps 438A to 438D, first to fifth flow rate control valves 436A to 436E, water supply valve 439, first to fourth flow meters 446A to 446D, first to fourth pH sensors 447A to 447D, first to fourth level gauges 448A to 448D, and pressure sensor PS11. The control unit 7 controls the power supply 419, first to fourth pumps 438A to 438D, and first to fifth flow rate control valves 436A to 436E.

The pH of the electrolytic liquid stored in the bottom part of the housing 431, or the pH detected by the pH sensor pHS1 is defined as pH1. The pH of the electrolytic liquid flowing through the part of the fourth passage 433 closer to the nozzle 432 than the third passage 405, or the pH detected by the pH sensor pHS2 is defined as pH2. The pH of the electrolytic liquid flowing through the third passage 405, or the pH detected by the pH sensor pHS3 is defined as pH3. The pH of the electrolytic liquid flowing through the first passage 403, or the pH detected by the pH sensor pHS4 is defined as pH4.

The control unit 7 controls the power supply 419, the first flow rate control valve 436A, and the second flow rate control valve 436B so as to satisfy

$$pH3 \geqq pH2 \geqq pH1 \geqq pH4 \geqq 5.5.$$

The control unit 7 controls the fifth flow rate control valve 436E based on the pressure of the gas phase portion in the gas-liquid separation device 406 acquired by the pressure sensor PS11.

(Example 1)

The carbon dioxide separation device 3 according to the first embodiment was fabricated as discussed in the following, and the effect thereof was confirmed. The carbon dioxide separation device consisted of a three-chamber electrolytic cell that has a first chamber (cathode chamber), a second chamber (anode chamber), and a liquid chamber which are separated by a first gas diffusion electrode (negative electrode) and a second gas diffusion electrode (positive electrode). The liquid chamber was formed between the first gas diffusion electrode and the second gas diffusion electrode. The first and second chambers were sized such that gas passing through these chambers can effectively contact the first and second gas diffusion electrodes. Also, the liquid chamber was formed thin so that the inter-liquid resistance became small. The first gas diffusion electrode and the second gas diffusion electrode were formed by applying a solution containing 30% by weight polytetrafluoroethylene (PTF) dispersed therein on the surface of carbon paper (porosity 70%, thickness 0.4 mm), and firing this assembly in an electric oven in a nitrogen atmosphere for 20 minutes at a temperature of 350° C.

The electrolytic liquid was prepared as follows. First, an aqueous solution containing 0.7M of disodium 4,5-dihydroxy-1,3-benzenedisulfonate and 1M of potassium bicarbonate was prepared. 30 mL of this aqueous solution was added to a single-chamber electrolytic cell using carbon paper for the negative electrode and the positive electrode, and constant current electrolysis was performed while humidified carbon dioxide gas was blown in at a flow rate of 100 mL/min. During this time, the amount of hydrogen contained in the gas discharged from the outlet of the electrolytic cell was monitored by using gas chromatography, and the electrolysis was terminated when the amount of the generated hydrogen had reached a level required for oxidizing a half of the 4,5-dihydroxy-1,3-benzenedisulfonic acid as estimated from the consumption of electric current.

A DC voltage was applied to the first gas diffusion electrode and the second gas diffusion electrode, and 20 mL of the electrolytic liquid was circulated in the liquid chamber at 5 mL/min. A producer gas containing 2.01 vol% of humidified $CO_2$, 1.00 vol% of $C_2H_4$, 0.10 vol% of $CH_4$, 0.10 vol% of CO, and a balance of $N_2$ was passed through the first chamber at 100 mL/min, while $N_2$ gas was passed through the second chamber at 100 mL/min. Then, the composition of the output gas of the second chamber was analyzed by using gas chromatography. The results are shown in FIG. 9. As can be seen from FIG. 9, about 80% of $CO_2$ was recovered in terms of current efficiency, and the levels of $C_2H_4$ and $CH_4$, and CO were below the detection limit. This result confirmed that $CO_2$ from the producer gas in the first chamber moved to the second chamber and was separated from the producer gas. It was also confirmed that $C_2H_4$, $CH_4$ and CO did not move to the second chamber.

(Example 2)

The same carbon dioxide separation device and electrolytic liquid as in Example 1 were used. A DC voltage

was applied to the first gas diffusion electrode and the second gas diffusion electrode, and 20 mL of the electrolytic liquid was circulated in the liquid chamber at 5 mL/min. A producer gas containing 0.201 vol% of humidified $CO_2$, 1.00 vol% of $C_2H_4$, 0.10 vol% of $O_2$, and a balance of $N_2$ was passed through the first chamber at 100 mL/min, and $N_2$ was passed through the second chamber. The gas was flowed at 100 mL/min. Then, the composition of the output gas of the second chamber was analyzed by using gas chromatography. The results are shown in FIG. 10. From FIG. 10, it can be seen that approximately 60% of $CO_2$ was recovered in terms of current efficiency, and $C_2H_4$ and $CO_2$ were below the detection limit. This result confirmed that $CO_2$ from the producer gas in the first chamber moved to the second chamber and was separated from the producer gas. It was also confirmed that $C_2H_4$ and $CO_2$ did not move to the second chamber.

The present invention has been described above in terms of specific embodiments thereof, but the present invention is not limited to these embodiments and can be modified in various ways without departing from the scope of the present invention.

LIST OF REFERENCE NUMERALS

| | | | |
|---|---|---|---|
| 1: | carbon dioxide recovery system | 2: | electrolytic reduction device |
| 3, 400: | carbon dioxide separation device | 4: | water removal device |
| 4A: | first water removal device | 4B: | second water removal device |
| 5: | producer gas separation device | 6: | combustion furnace |
| 7: | control device | 51: | first gas diffusion electrode |
| 52: | second gas diffusion electrode | 53: | liquid chamber |
| 54: | first chamber | 55: | second chamber |
| 62: | producer gas inlet passage | 64: | first producer gas outlet passage |
| 65: | first vessel | 66: | second producer gas outlet passage |
| 68: | pressure control valve | 69: | pressure control valve |
| 71: | carbon dioxide recirculation passage | | |
| 72: | second vessel (gas-liquid separation device) | | |
| 74: | third vessel | 75: | carbon dioxide return passage |
| 76: | pressure control valve | 81: | electrolyte supply passage |
| 82: | electrolytic liquid tank | 84: | pressure control valve |
| 87: | first electrolytic liquid return passage | 95: | second electrolytic liquid return passage |
| 116: | purge gas recirculation passage | 133: | gas-liquid separation device |
| 401: | carbon dioxide gas absorption unit | 402: | electrochemical cell |
| 403: | first passage | 404: | second passage |
| 405: | third passage | 406: | gas-liquid separator |
| 411: | gas inlet | 412: | gas outlet |
| 413: | electrolytic liquid inlet | 414: | electrolytic liquid outlet |
| 416: | membrane electrode assembly | 416A: | electrolytic liquid membrane |
| 416B: | cathode | 416C: | anode |
| 417: | cathode chamber | 418: | anode chamber |
| 419: | power supply | 431: | housing |
| 432: | nozzle | 433: | fourth passage |
| 434: | tray | 436A: | first flow rate control valve |
| 436B: | second flow rate control valve | PS1: | pressure sensor |
| PS2: | pressure sensor | PS3: | pressure sensor |
| PS4: | pressure sensor | | |

## Claims

**1.** A carbon dioxide recovery system, comprising,

an electrolytic reduction device configured to be supplied with a gas containing carbon dioxide and generate a mixed gas containing at least a producer gas containing at least one of a hydrocarbon, carbon monoxide and hydrogen, and unreacted carbon dioxide by an electrolytic reduction of the carbon dioxide; and

a carbon dioxide separation device that separates the carbon dioxide from the mixed gas,
wherein the carbon dioxide separation device comprises
a first gas diffusion electrode serving as a cathode,
a second gas diffusion electrode serving as an anode,
a liquid chamber formed between the first gas diffusion electrode and the second gas diffusion electrode and configured to be supplied with an electrolytic liquid containing a compound that adsorbs and desorbs protons in an oxidation-reduction reaction,
a first chamber separated from the liquid chamber by the first gas diffusion electrode and configured to be supplied with the mixed gas, and
a second chamber separated from the liquid chamber by the second gas diffusion electrode and through which the carbon dioxide separated from the mixed gas flow,
the electrolytic reduction device being configured to use the carbon dioxide separated from the mixed gas in the carbon dioxide separation device as a part of an input material thereof.

**2.** The carbon dioxide recovery system as defined in claim 1, wherein the carbon dioxide recovery system further comprises

at least one water removal device for separating water from the producer gas from which carbon dioxide has been separated in the carbon dioxide separation device, and
a producer gas separation device for separating a hydrocarbon from the producer gas by cooling the producer gas from which water has been separated in the water removal device.

**3.** The carbon dioxide recovery system as defined in claim 2, wherein the carbon dioxide recovery system further comprises a combustion furnace for burning at least a part of an off-gas generated from the producer gas by removing a hydrocarbon therefrom in the producer gas separation device, the water removal device being configured to perform an adsorption step for releasing the producer gas after removing water therefrom by adsorption and a desorption step for releasing the water adsorbed in the adsorption step by using heat generated in the combustion furnace.

**4.** The carbon dioxide recovery system as defined in claim 3, wherein the carbon dioxide recovery system further comprises a first gas-liquid separation device for separating liquefied water from the producer gas released in the desorption step and containing water, and a recirculation passage for returning the producer gas from which the liquefied water has been removed in the first gas-liquid separation device to the water removal device, the recirculation passage being in a heat exchanging relationship with the combustion furnace.

**5.** The carbon dioxide recovery system as defined in claim 4, wherein a part of the producer gas from which water has been removed in the water removal device is supplied to the recirculation passage.

**6.** The carbon dioxide recovery system as defined in claim 3, wherein the carbon dioxide recovery system further comprises an exhaust gas passage for supplying exhaust gas generated in the combustion furnace and containing carbon dioxide and water to the electrolytic reduction device.

**7.** The carbon dioxide recovery system as defined in claim 3, wherein the water removal device is one of a pair of water removal devices that are provided in parallel to each other, and when one of the water removal devices is performing the adsorption step, the other water removal device performs the desorption steps.

**8.** The carbon dioxide recovery system as defined in any one of claims 1 to 7, wherein the carbon dioxide recovery system further comprises

a carbon dioxide recirculation passage connected to an inlet and an outlet of the second chamber of the carbon dioxide separation device,
a carbon dioxide return passage connecting the carbon dioxide recirculation passage to an inlet of a cathode chamber of the electrolytic reduction device,
a mixed gas inlet passage connecting an inlet of the first chamber of the carbon dioxide separation device to an outlet of the cathode chamber of the electrolytic reduction device,
a producer gas outlet passage connected to an outlet of the first chamber of the carbon dioxide separation device, and
an electrolytic liquid tank connected to an inlet of the liquid chamber via an electrolytic liquid supply passage

and to an outlet of the liquid chamber via a first electrolytic liquid return passage.

**9.** The carbon dioxide recovery system as defined in claim 8, wherein the carbon dioxide recovery system further comprises

a second gas-liquid separation device provided in the carbon dioxide recirculation passage,
a second electrolytic liquid return passage for transferring liquid separated in the second gas-liquid separation device to the electrolytic liquid tank,
a first pressure control valve provided in the carbon dioxide return passage,
a second pressure control valve provided in the mixed gas inlet passage or the producer gas outlet passage,
a third pressure control valve provided in the electrolytic liquid supply passage or the first electrolytic liquid return passage,
a first pressure sensor for detecting a pressure in the first chamber as a first pressure,
a second pressure sensor for detecting a pressure in the second chamber as a second pressure,
a third pressure sensor for detecting a pressure in the liquid chamber as a third pressure, and
a control unit for controlling the first pressure control valve, the second pressure control valve, and the third pressure control valve so that the first pressure is equal to or higher than the third pressure, and the third pressure is equal to or higher than the second pressure.

**10.** The carbon dioxide recovery system as defined in claim 9, wherein the carbon dioxide recovery system further comprises

a fourth pressure control valve provided in a part of the producer gas outlet passage downstream of the first pressure control valve,
a gas return passage connected between a top part of the electrolytic liquid tank and a part of the producer gas outlet passage upstream of the fourth pressure control valve, and
a fourth pressure sensor for detecting a pressure of the electrolytic liquid tank as a fourth pressure,
wherein the control unit is configured to control the first pressure control valve, the second pressure control valve, the third pressure control valve and the fourth pressure control valve so that the first pressure is equal to or higher than the third pressure, the third pressure is equal to or higher than the fourth pressure, and the fourth pressure is equal to or higher than the second pressure.

**11.** The carbon dioxide recovery system as defined in claim 1, wherein the hydrocarbon includes at least one of methane and ethylene.

**12.** The carbon dioxide recovery system as defined in claim 1, wherein the compound that adsorbs and desorbs protons by oxidation-reduction is an organic compound having an oxidation-reduction potential of -1.0 V to 1.0 V based on a standard hydrogen electrode potential at pH 7.

**13.** The carbon dioxide recovery system as defined in claim 1, wherein the compound that adsorbs and desorbs protons by oxidation-reduction is a quinone-based compound.

**14.** A carbon dioxide recovery system, comprising,

an electrolytic reduction device configured to be supplied with a gas containing carbon dioxide and generate a mixed gas containing at least a producer gas containing at least one of a hydrocarbon, carbon monoxide and hydrogen, and unreacted carbon dioxide by an electrolytic reduction of the carbon dioxide; and
a carbon dioxide separation device configured to separate carbon dioxide gas from the mixed gas,
wherein the carbon dioxide separation device includes
a carbon dioxide absorption unit configured to contact the mixed gas with an electrolytic liquid containing a compound that adsorbs and desorbs protons in an oxidation-reduction reaction to cause the carbon dioxide in the mixed gas to be adsorbed in the electrolytic liquid,
an electrochemical cell which is partitioned into a cathode chamber and an anode chamber by a membrane electrode assembly including an electrolytic membrane and a cathode and an anode formed on either side of the electrolytic membrane and connected to a power supply,
a first passage for flowing the electrolytic liquid from the carbon dioxide gas absorption unit to the anode chamber,
a second passage for flowing the electrolytic liquid from the anode chamber to the cathode chamber,
a third passage for flowing the electrolytic liquid from the cathode chamber to the carbon dioxide gas absorption

unit, and
a gas-liquid separation device provided in the second passage for separating carbon dioxide gas from the electrolytic liquid,
the electrolytic reduction device being configured to use the carbon dioxide separated from the mixed gas in the carbon dioxide separation device as part of input material thereof.

**15.** The carbon dioxide recovery system as defined in claim 14, wherein the carbon dioxide absorption unit includes a housing extending vertically and configured to store the electrolytic liquid in a bottom part thereof,

a gas inlet provided in a lower part of the housing for feeding the mixed gas into the housing,
a gas outlet provided in an upper part of the housing for discharging the mixed gas from the housing,
a nozzle provided in an upper part of the housing for injecting the electrolytic liquid into the housing,
a fourth passage for supplying the electrolytic liquid stored in the bottom part of the housing to the nozzle,
a tray provided in a part of the housing located between the gas inlet and the nozzle for temporarily storing the electrolytic liquid supplied from the nozzle, and
an electrolytic liquid outlet provided in the tray,
wherein the electrolytic liquid outlet is connected to the first passage,
the third passage is connected to the fourth passage,
the third passage is provided with a first flow rate control valve, and
a second flow rate control valve provided in a part of the fourth passage closer to the bottom part of the housing than the third passage,
the power supply, the first flow rate control valve and the second flow rate control valve being controlled by a control unit in such a manner that

$$pH3 \geqq pH2 \geqq pH1 \geqq pH4 \geqq 5.5$$

where pH1 is a pH value of the electrolytic liquid stored in the bottom part of the housing,
pH2 is a pH value of the electrolytic liquid in a part of the fourth passage closer to the nozzle than the third passage,
pH3 is a pH value of the electrolytic liquid flowing through the third passage, and
pH4 is a pH value of the electrolytic liquid flowing through the first passage.

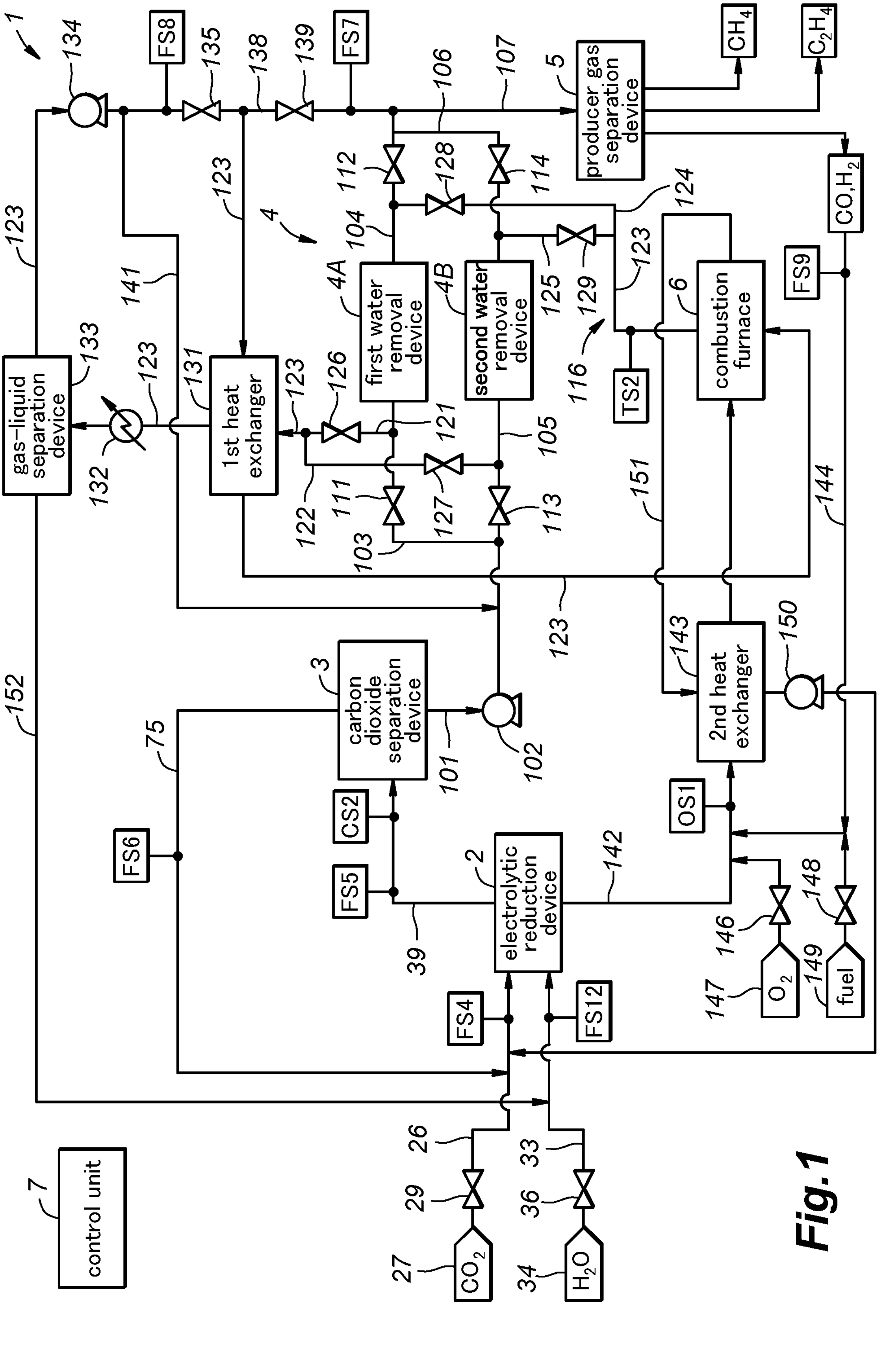
1
control unit
7
gas-liquid separation device
133
1st heat exchanger
131
132
first water removal device
4A
second water removal device
4B
4
producer gas separation device
5
$CH_4$
$C_2H_4$
$CO,H_2$
combustion furnace
6
2nd heat exchanger
143
150
carbon dioxide separation device
3
101
102
electrolytic reduction device
2
39
142
FS4
FS5
FS6
FS7
FS8
FS9
FS12
CS2
OS1
TS2
$CO_2$
27
29
26
$H_2O$
34
36
33
$O_2$
147
146
fuel
149
148
75
152
123
141
134
135
138
139
106
107
112
114
128
104
124
125
129
116
126
121
122
111
127
113
103
105
151
144
Fig.1

Fig.2

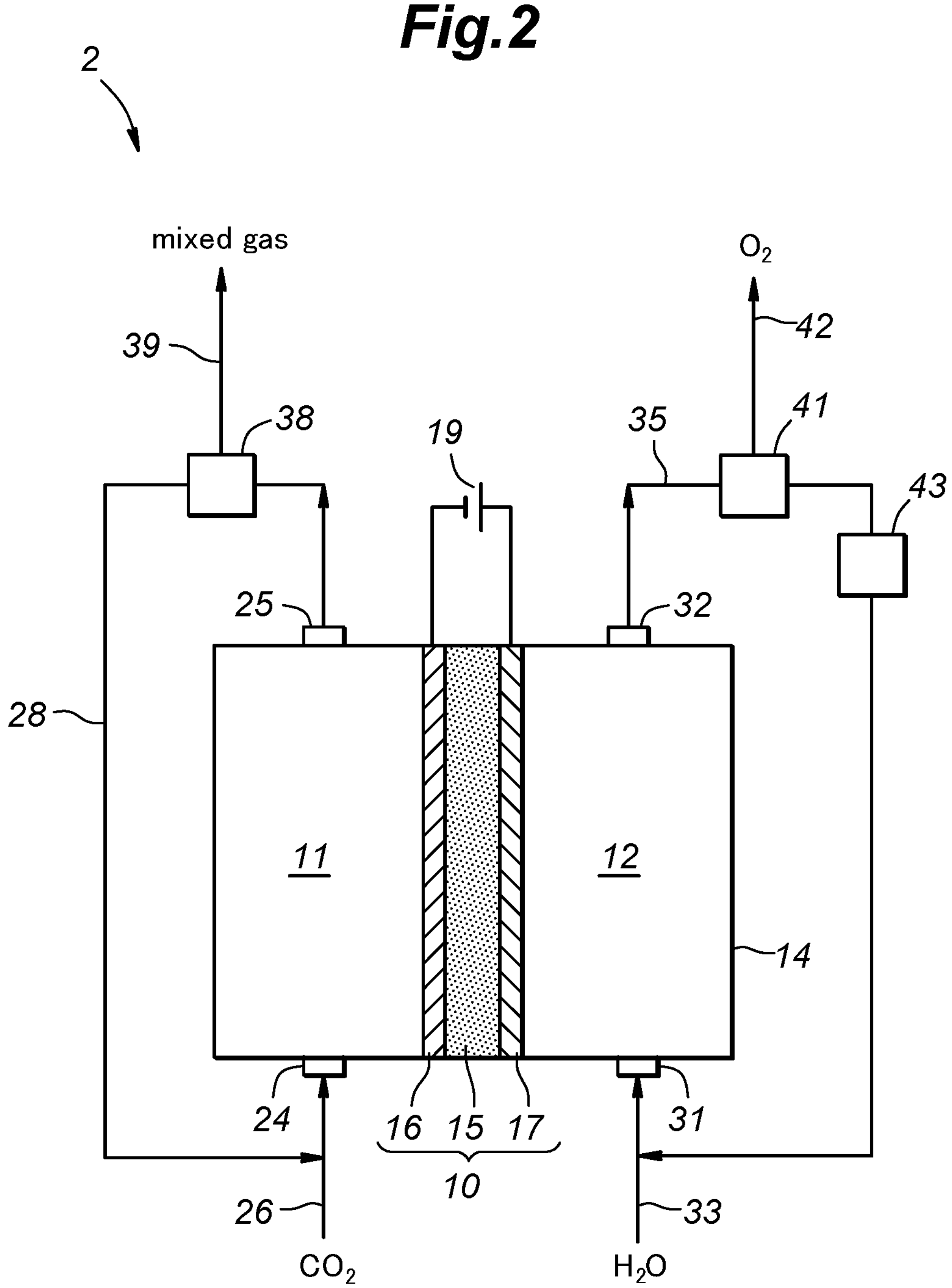
2
mixed gas
$O_2$
39
38
19
35
41
42
43
25
32
28
11
12
14
24
16
15
17
31
10
26
33
$CO_2$
$H_2O$

Fig.3

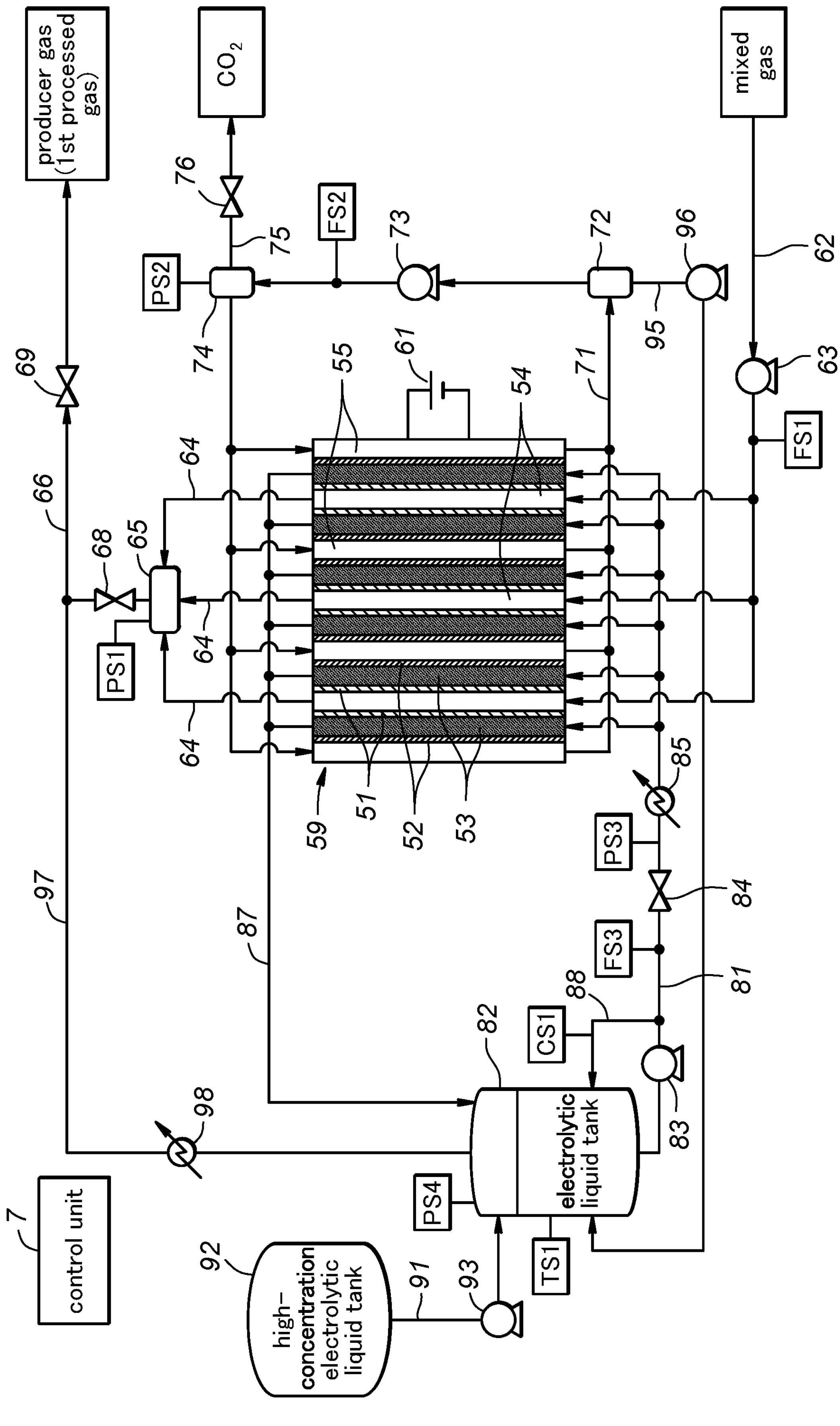
producer gas (1st processed gas)
CO2
mixed gas
control unit
high-concentration electrolytic liquid tank
electrolytic liquid tank
PS1
PS2
PS3
PS4
FS1
FS2
FS3
CS1
TS1
3
7
51
52
53
54
55
59
61
62
63
64
65
66
68
69
71
72
73
74
75
76
81
82
83
84
85
87
88
91
92
93
95
96
97
98

Fig.4

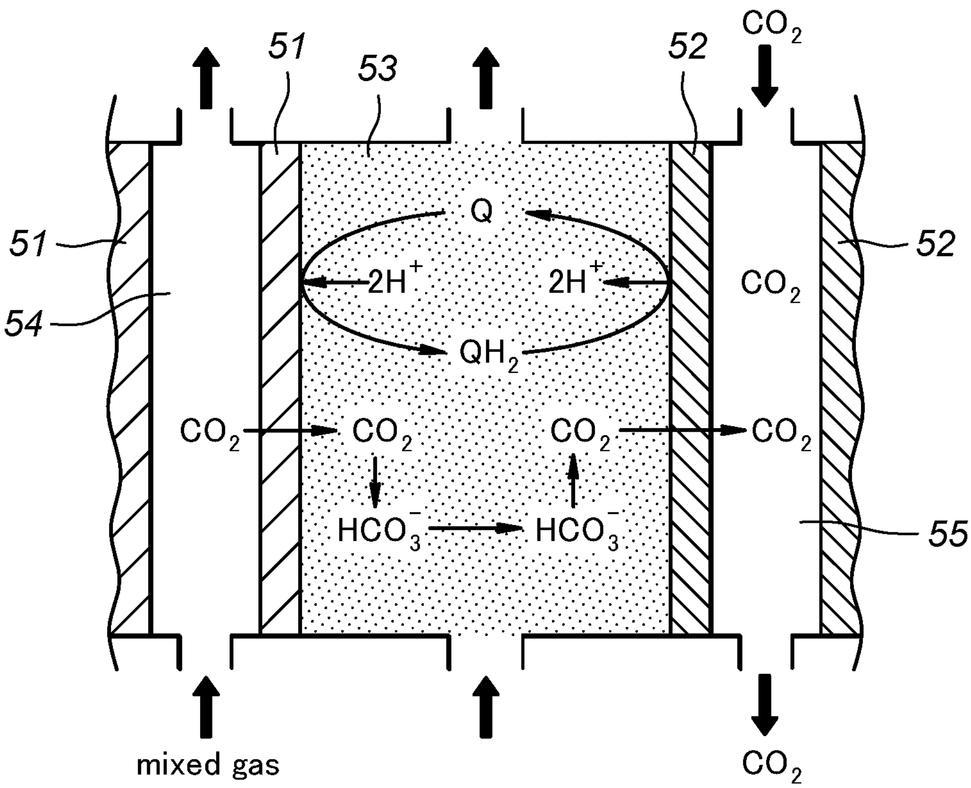
51
53
52
$CO_2$
51
54
Q
2H+
2H+
$CO_2$
52
QH2
$CO_2$
$CO_2$
$CO_2$
$CO_2$
$HCO_3^-$
$HCO_3^-$
55
mixed gas
$CO_2$

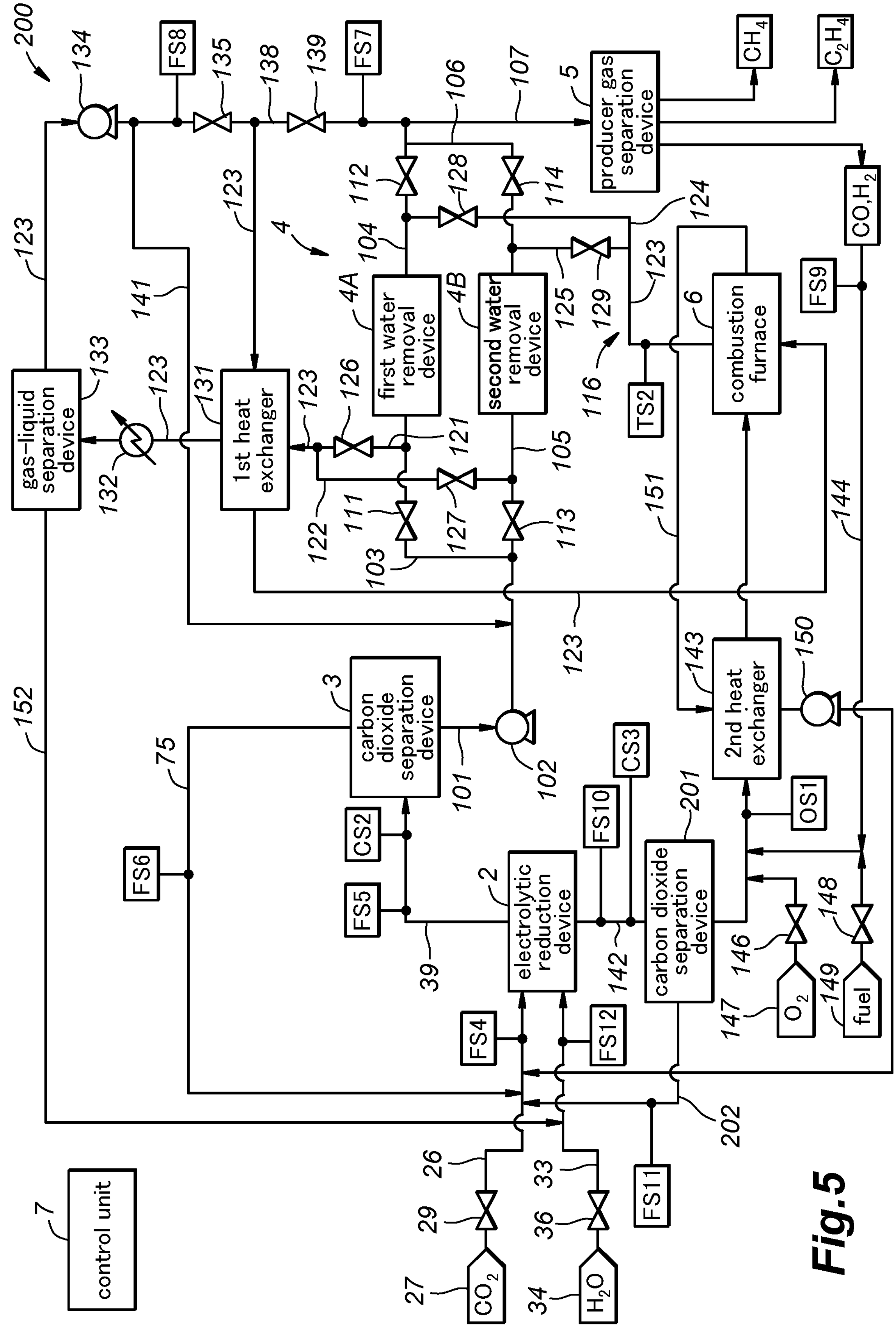
200
gas-liquid separation device
1st heat exchanger
first water removal device
second water removal device
producer gas separation device
$CH_4$
$C_2H_4$
CO,$H_2$
combustion furnace
carbon dioxide separation device
electrolytic reduction device
carbon dioxide separation device
2nd heat exchanger
control unit
$CO_2$
$H_2O$
$O_2$
fuel
FS4
FS5
FS6
FS7
FS8
FS9
FS10
FS11
FS12
CS2
CS3
TS2
OS1
2
3
4
4A
4B
5
6
7
26
27
29
33
34
36
39
75
101
102
103
104
105
106
107
111
112
113
114
116
121
122
123
124
125
126
127
128
129
131
132
133
134
135
138
139
141
142
143
144
146
147
148
149
150
151
152
201
202

Fig.5

# Fig.6

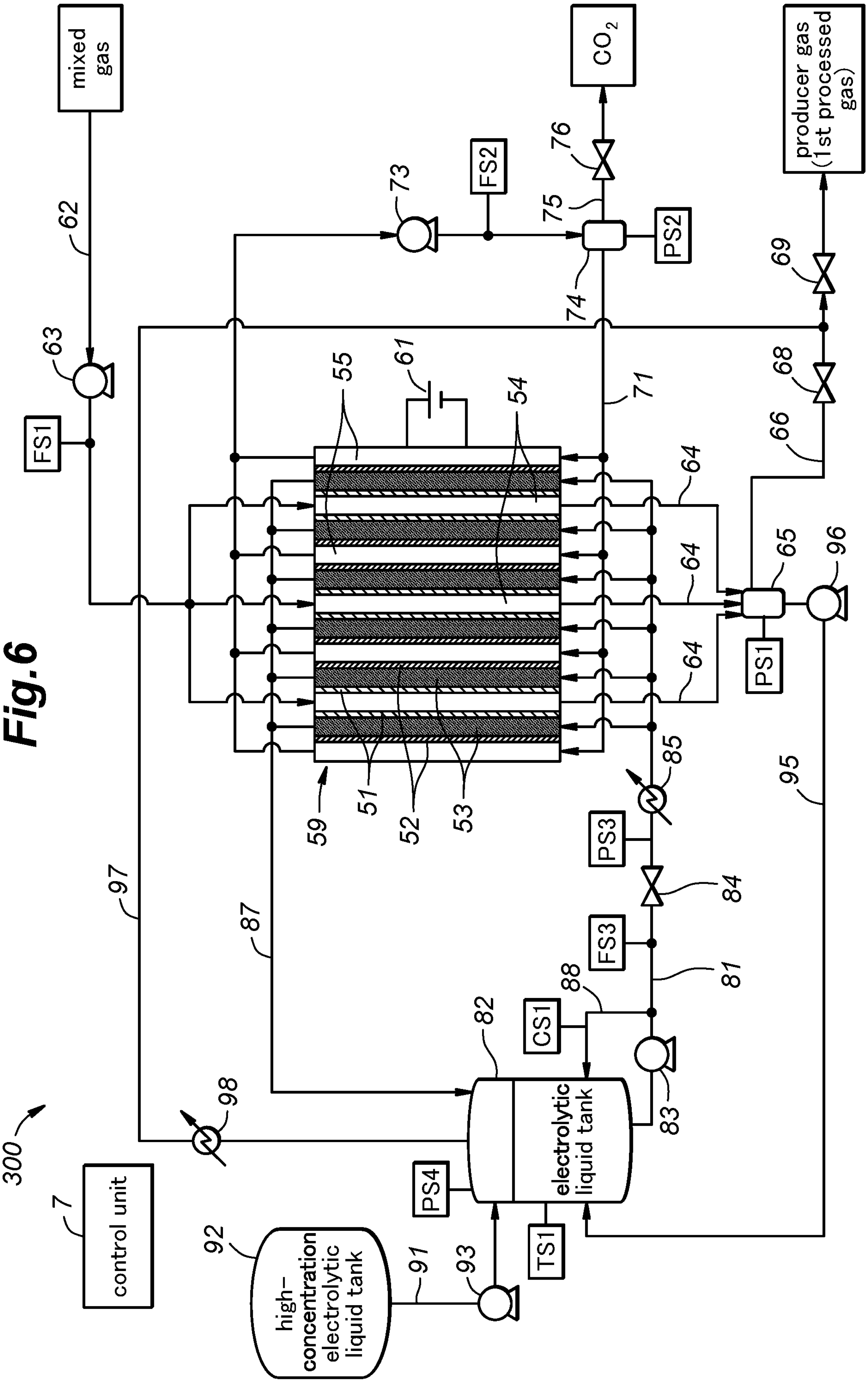
300
mixed gas
CO$_2$
producer gas (1st processed gas)
control unit
electrolytic liquid tank
high-concentration electrolytic liquid tank
FS1
FS2
FS3
PS1
PS2
PS3
PS4
CS1
TS1
7
51
52
53
54
55
59
61
62
63
64
65
66
68
69
71
73
74
75
76
81
82
83
84
85
87
88
91
92
93
95
96
97
98

Fig.7

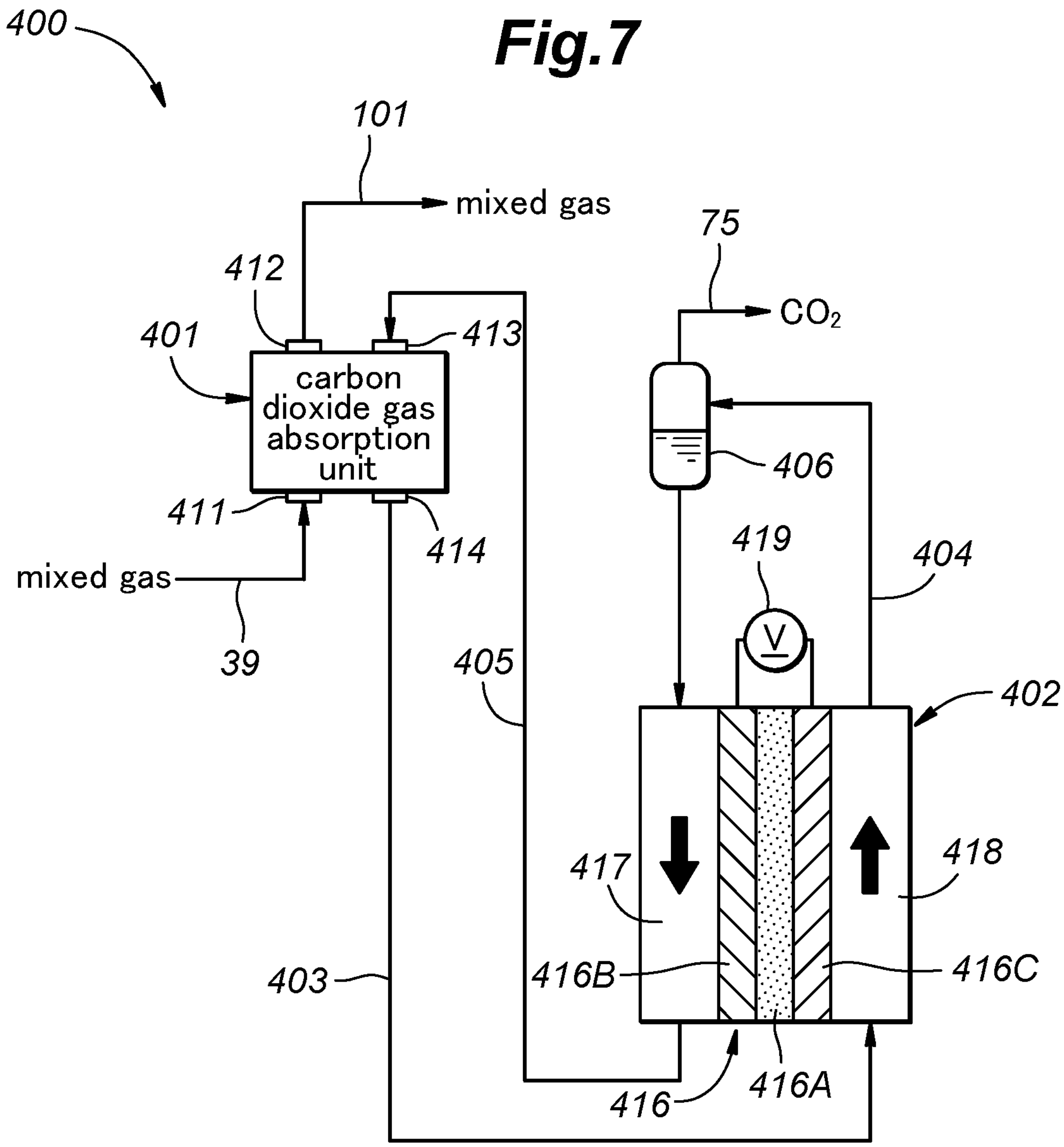
400
101
mixed gas
412
401
413
carbon dioxide gas absorption unit
411
414
mixed gas
39
75
$CO_2$
406
419
V
404
405
402
417
418
403
416B
416C
416
416A

Fig.8

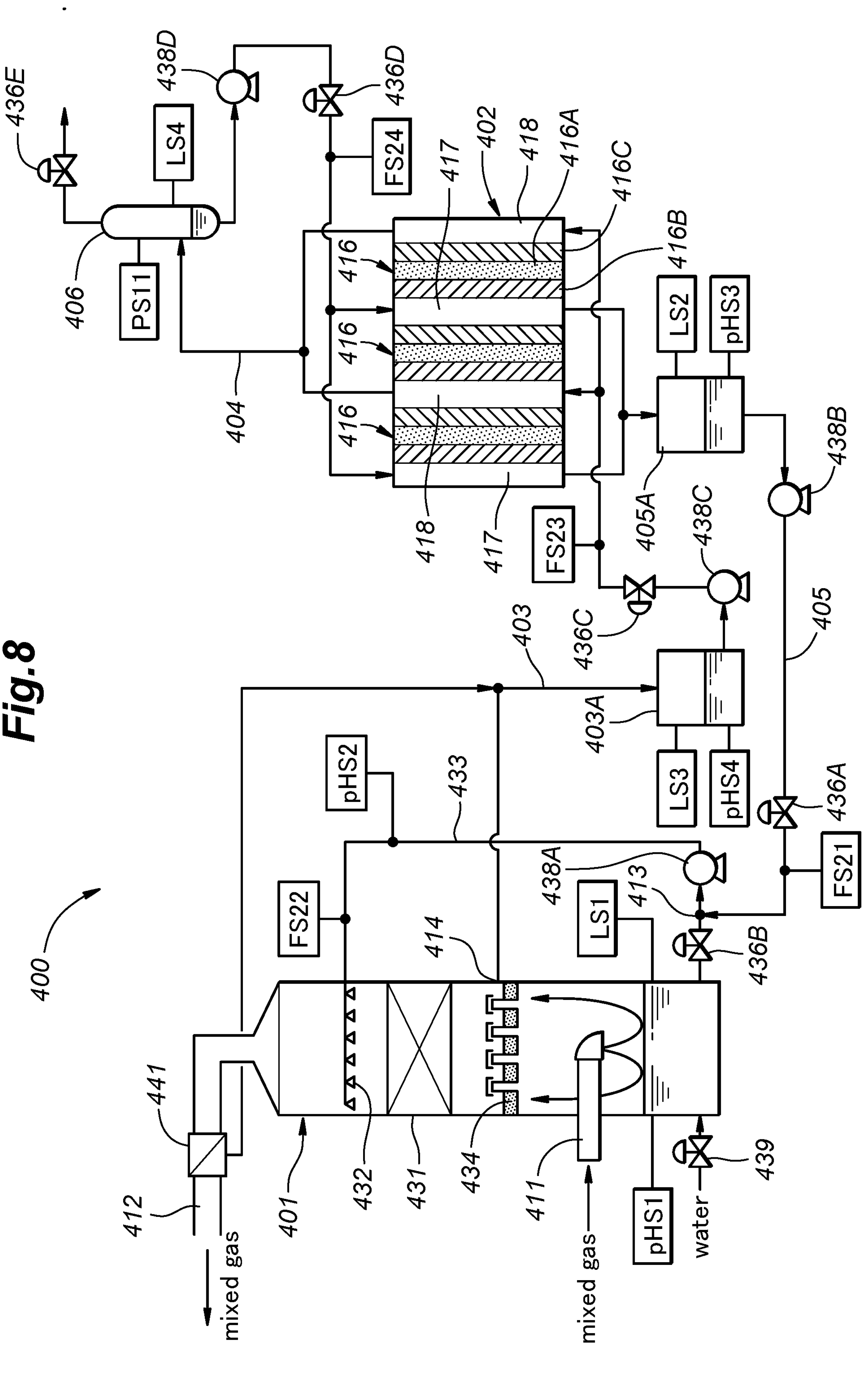

400
401
402
403
403A
404
405
405A
406
411
412
413
414
416
416A
416B
416C
417
418
431
432
433
434
436A
436B
436C
436D
436E
438A
438B
438C
438D
439
441
PS11
LS1
LS2
LS3
LS4
pHS1
pHS2
pHS3
pHS4
FS21
FS22
FS23
FS24
mixed gas
mixed gas
water

# Fig.9

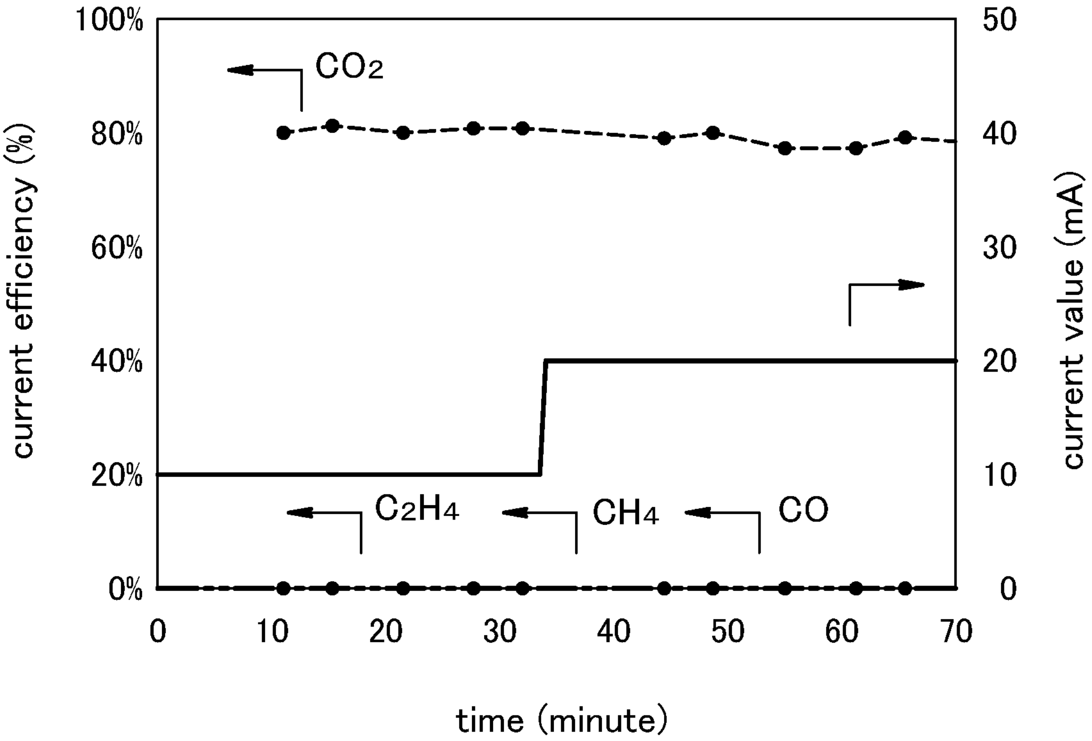
100%
80%
60%
40%
20%
0%
current efficiency (%)
50
40
30
20
10
0
current value (mA)
CO2
C2H4
CH4
CO
0
10
20
30
40
50
60
70
time (minute)

*Fig.10*

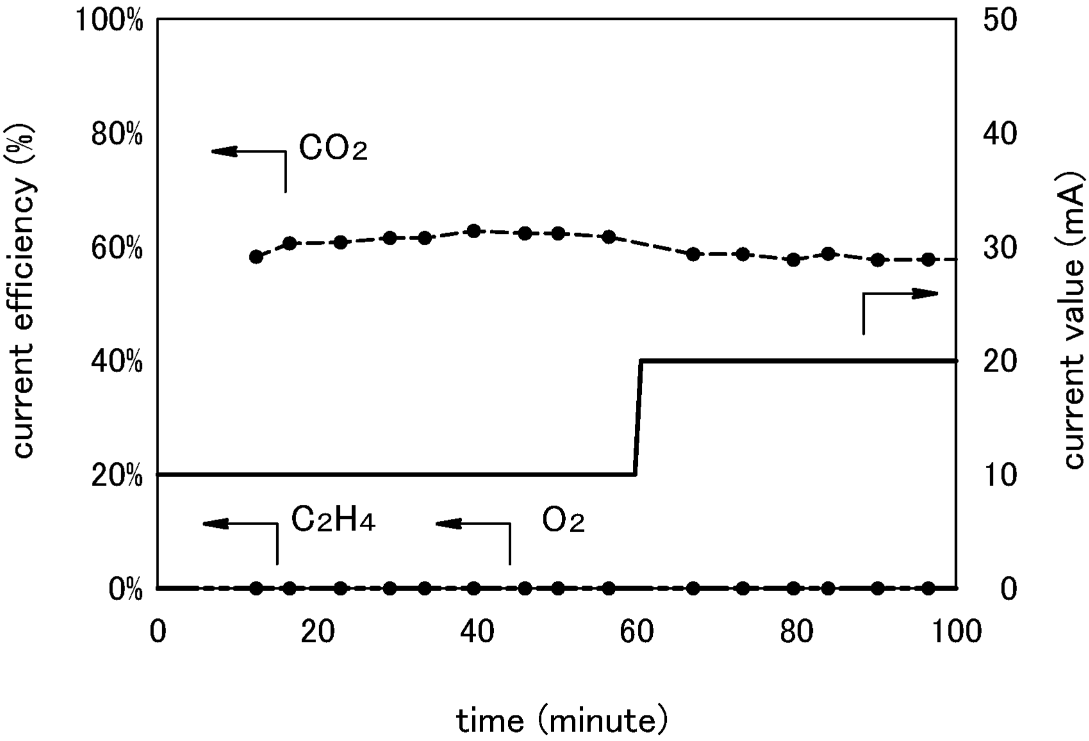
100%
80%
60%
40%
20%
0%
current efficiency (%)
50
40
30
20
10
0
current value (mA)
CO2
C2H4
O2
0
20
40
60
80
100
time (minute)

## INTERNATIONAL SEARCH REPORT

International application No.
**PCT/JP2022/028267**

**A. CLASSIFICATION OF SUBJECT MATTER**

***C25B 3/26***(2021.01)i; ***B01D 53/26***(2006.01)i; ***B01D 53/32***(2006.01)i; ***C07C 7/148***(2006.01)i; ***C07C 9/04***(2006.01)i; ***C07C 9/06***(2006.01)i; ***C25B 1/02***(2006.01)i; ***C25B 1/23***(2021.01)i; ***C25B 15/023***(2021.01)i; ***C25B 15/08***(2006.01)i
FI: C25B3/26; C25B1/23; C25B1/02; C25B15/023; C07C9/04; C07C9/06; C07C7/148; B01D53/32; B01D53/26 200; C25B15/08 302

According to International Patent Classification (IPC) or to both national classification and IPC

**B. FIELDS SEARCHED**

Minimum documentation searched (classification system followed by classification symbols)

C25B3/26; B01D53/26; B01D53/32; C07C7/148; C07C9/04; C07C9/06; C25B1/02; C25B1/23; C25B15/023; C25B15/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-533470 A (MASSACHUSETTS INST. OF TECHNOLOGY) 15 November 2018 (2018-11-15)<br>entire text, all drawings | 1-15 |
| A | JP 2015-199042 A (TOSHIBA CORP.) 12 November 2015 (2015-11-12)<br>entire text, all drawings | 1-15 |
| A | JP 2018-131647 A (TOKYO GAS CO., LTD.) 23 August 2018 (2018-08-23)<br>entire text, all drawings | 1-15 |
| A | JP 2018-150596 A (CHIYODA CORP.) 27 September 2018 (2018-09-27)<br>entire text, all drawings | 1-15 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 October 2022** | **18 October 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/028267**

| Patent document cited in search report | Publication date (day/month/year) | Patent family member(s) | Publication date (day/month/year) |
|---|---|---|---|
| JP 2018-533470 A | 15 November 2018 | US 2020/0023307 A1<br>US 2017/0113182 A1<br>WO 2017/075014 A1<br>EP 3368474 A1<br>KR 10-2018-0084820 A<br>CN 108463433 A | |
| JP 2015-199042 A | 12 November 2015 | (Family: none) | |
| JP 2018-131647 A | 23 August 2018 | (Family: none) | |
| JP 2018-150596 A | 27 September 2018 | WO 2018/168876 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6622237 B